# EUROPÄISCHE PATENTSCHRIFT

(11) **EP 3 697 648 B1**
(45) Veröffentlichungstag und Bekanntmachung des Hinweises auf die Patenterteilung: **08.12.2021**
(21) Anmeldenummer: 18785908.7
(22) Anmeldetag: 08.10.2018
(51) Int. Cl.: B60R 21/214, B60R 21/2338, B60R 21/237

(54) **FAHRZEUGINSASSEN-RÜCKHALTESYSTEM MIT EINEM GASSACKMODUL UND VERFAHREN ZUM ZUSAMMENLEGEN EINES GASSACKS**
VEHICLE OCCUPANT RESTRAINT SYSTEM HAVING AN AIRBAG MODULE AND METHOD FOR ASSEMBLING AN AIRBAG
SYSTÈME DE RETENUE D'OCCUPANT DE VÉHICULE COMPRENANT UN MODULE DE COUSSIN GONFLABLE ET PROCÉDÉ POUR PLIER UN COUSSIN GONFLABLE

(30) Priorität: 20.10.2017 DE 102017124576
(43) Veröffentlichungstag der Anmeldung: 26.08.2020
(73) Patentinhaber: Dalphi Metal España, S.A., 36213 Vigo (ES)
(72) Erfinder: NAVARRO ARRANZ, Antonio, 47008 Valladolid (ES); RAMOS AGUSTÍN, Ramón, 47150 Viana de Cega (Valladolid) (ES)
(74) Vertreter: ZF Patentabteilung - DIPS
(86) Internationale Anmeldenummer: PCT/EP2018/077325
(87) Internationale Veröffentlichungsnummer: WO 2019/076666

(56) Entgegenhaltungen:
- WO-A1-2015/169437
- WO-A2-2015/169440
- DE-A1-102014 005 827
- DE-U1-202016 105 912
- US-A1- 2002 024 200

## Beschreibung

Die Erfindung betrifft ein Fahrzeuginsassen-Rückhaltesystem mit einem Gassackmodul und ein Verfahren zum Zusammenlegen eines Gassacks des Gassackmoduls.

Zum Schutz der Fahrzeuginsassen werden mit großem Erfolg Gassäcke eingesetzt. Diese sind vor ihrem Einsatz hinter einer Fahrzeugverkleidung untergebracht, aus der heraus sie sich entfalten. Jedoch haben insbesondere Frontgassäcke oft ein großes Füllvolumen und eine unregelmäßige dreidimensionale Gestalt, was ein reibungsloses Entfalten in den Fahrzeuginnenraum erschwert.

Aus dem Dokument WO 2015/169440 A2 ist ein Fahrzeuginsassen-Rückhaltesystem mit einem Gassackmodul unter einer Dachhimmelverkleidung bekannt. Durch die unterschiedliche Faltung des Gassacks wird eine Reihenfolge im Aufblasverhalten der Gassackabschnitte bewirkt.

Aus dem Dokument DE 10 2014 005 827 A1 ist ferner ein Gassack bekannt, der sich aus dem Armaturenbrett heraus entfaltet und dessen Erstreckung in Richtung des Fahrzeuginsassen mit einem lösbaren Fangband kontrolliert wird.

Aufgabe der Erfindung ist es, das Entfalten und die Positionierung eines Gassacks eines unter einer Dachhimmelverkleidung angeordneten Gassackmoduls im Fahrzeuginnenraum zu verbessern.

Dies wird mit einem Fahrzeuginsassen-Rückhaltesystem mit den Merkmalen des Anspruchs 1 erreicht. Das erfindungsgemäße Fahrzeuginsassen-Rückhaltesystem umfasst ein Gassackmodul, das am Dachhimmel unter einer Dachhimmelverkleidung angeordnet ist, mit einem Gasgenerator und einem frontal wirkenden Gassack. Der Gassack hat ein gasgeneratorseitiges Einblasende sowie ein erstes freies Ende, das einen Rückhalteteil des Gassacks begrenzt, wobei der Rückhalteteil einen Großteil des aufblasbaren Volumens des Gassacks umfasst und das erste freie Ende im aufgeblasenen Zustand des Gassacks in einem Fahrzeuginnenraum liegt. In einem ersten Zeitraum während der Entfaltung des Gassacks ist das erste freie Ende noch über ein Fangband mit dem Gassackmodul im Bereich des Einblasendes verbunden. Bei Erreichen einer vorbestimmten Zugkraft löst sich das Fangband und gibt das erste freie Ende frei. Auf diese Weise lässt sich das Entfaltungsverhalten sowie die Reihenfolge der Befüllung verschiedener Gassackbereiche gezielt beeinflussen.

Das Gassackmodul ist insbesondere auf einer Beifahrerseite des Fahrzeugs am Dachhimmel unter einer Dachhimmelverkleidung im Bereich einer Sonnenblende angeordnet, sodass sich der Gassack von oben entlang der Windschutzscheibe herab entfaltet.

Das Fangband ist vorzugsweise ein Gewebestück, das an einer Seite mit dem Gassack verbunden ist und an einer anderen, gegenüberliegenden Seite im Bereich des Einblasendes beispielsweise direkt am Gasgenerator befestigt ist.

Das Fangband weist vorteilhaft eine Schwächungszone auf, an der sich das Fangband bei Überschreiten einer vorgegebenen Zugkraft teilt und das erste Ende des Gassacks freigibt. Die vorgegebene Zugkraft wird zum Ende des ersten Zeitraums erreicht. Auf diese Weise lässt sich das erste freie Ende etwa einige Millisekunden nach der Aktivierung des Gasgenerators im Bereich des Gasgenerators zurückhalten.

In einer bevorzugten Ausführungsform weist der Gassack am Einblasende einen Hals auf, der in Fahrzeugquerrichtung gesehen schmaler ist als der anschließende Rückhalteteil des Gassacks. Der Hals ist aufblasbar und verbindet den Rückhalteteil mit dem Gasgenerator, trägt aber im Normalfall nicht zur Rückhaltewirkung des Gassacks bei. Indem der Hals schmaler und insbesondere in Längsrichtung des Gassacks auch kürzer ausgeführt ist als der anschließende Rückhalteteil können Material, Bauraum und Füllvolumen eingespart werden.

Generell kann der Gasgenerator ein bekannter Rohrgasgenerator sein, der so im Gassackmodul angeordnet ist, dass seine Längsachse senkrecht zur Modullängsrichtung des Gassackmoduls steht, wobei die Modullängsrichtung im eingebauten Zustand des Gassackmoduls mit einer Entfaltungsrichtung des Gassacks aus dem Gassackmodul zusammenfällt und ungefähr in Fahrzeuglängsrichtung zeigt.

Die Breite des Halses kann beispielsweise in etwa mit der Länge des Gasgenerators übereinstimmen,

In einem anfänglichen Zustand vor der Aktivierung des Gasgenerators ist der Gassack zu einem Gassackpaket zusammengelegt, das vorzugsweise einen zusammengelegten Hauptabschnitt und einen gefalteten Verbindungsabschnitt Verbindungsabschnitt den gefalteten Hals enthält. Hals und Rückhalteteil sind somit zu separaten Paketabschnitten gefaltet, die beispielsweise über ein kurzes ungefaltetes Stück des doppellagigen Gassacks verbunden sind.

Vorteilhaft sind der Verbindungsabschnitt und das Hauptpaket so zusammengelegt und so im Gassackpaket positioniert, dass sich nach der Aktivierung des Gasgenerators zuerst der Hals befüllt, wodurch sich der Verbindungsabschnitt streckt und entfaltet und das zusammengelegte Hauptpaket in Richtung zum Fahrzeuginnenraum geschoben wird. Der Hals wird in diesem Fall dazu genutzt, den noch größtenteils zusammengelegten Rückhalteteil des Gassacks in den Fahrzeuginnenraum zu schieben, wo er sich ungehindert von Verkleidungsteilen in seine endgültige Position und Form entfalten kann.

Der Hals ist hierzu beispielsweise in einer reinen Zickzackfaltung zusammengelegt, beispielsweise mit etwa einer bis drei Zickzackfalten, wobei der Gasgenerator, der Verbindungsabschnitt und das Hauptpaket auf einer Gerade linear hintereinander in der Modullängsrichtung angeordnet sind, um die Schubwirkung des sich streckenden Verbindungsabschnittes zum Auswerfen des Hauptpakets ausnutzen zu können.

Das Fangband sollte zumindest so lange intakt bleiben, bis das Hauptpaket beginnt, sich im Fahrzeuginnenraum zu entfalten.

Im vollständig aufgeblasenen Zustand erstreckt sich der Gassack beispielsweise im Fahrzeuginnenraum von einem Bereich der Sonnenblende entlang einer Windschutzscheibe zu und über eine Armaturentafel in Richtung eines Fahrzeuginsassen. Das erste freie Ende bildet dabei insbesondere ein unteres, zum Fahrzeuginsassen gerichtetes Ende des Gassacks und kann auch ein unteres Ende einer Prallfläche für den Fahrzeuginsassen darstellen. Der Gassack stützt sich also an der Windschutzscheibe und der Armaturentafel ab.

Der Gassack hat vorzugsweise ein zweites freies, vorderes Ende, das im vollständig aufgeblasenen Zustand an einem Übergang der Windschutzscheibe zur Armaturentafel liegt.

Um dem Gassack diese Form zu verleihen, kann der Gassack einen ersten Außenwandabschnitt aufweisen, der sich vom Einblasende zum zweiten freien Ende erstreckt und eine Abstützfläche gegenüber der Windschutzscheibe bildet, sowie einen zweiten Außenwandabschnitt, der sich vom zweiten freien Ende zum ersten freien Ende über die Armaturentafel erstreckt, und einen dritten Außenwandabschnitt, der dem ersten und dem zweiten Außenwandabschnitt zumindest teilweise gegenüberliegt und der sich vom ersten freien Ende zum Einblasende erstreckt und der eine Prallfläche für den Fahrzeuginsassen bildet. Der zusammengenähte, aber nicht aufgeblasene Gassack ist nicht vollständig in einer Weise flach ausbreitbar, dass jeweils lediglich zwei Gassacklagen übereinanderliegen, sondern hat auch im nicht aufgeblasenen Zustand eine gewisse dreidimensionale Form, in der teilweise vier Lagen des Gassacks übereinanderliegen.

Zusätzlich ist vorzugsweise im nicht aufgeblasenen, entfalteten Zustand des Gassacks der dritte Außenwandabschnitt in einem Bereich des Übergangs vom ersten zum zweiten Außenwandabschnitt mit einer eingefalteten Tasche versehen.

Der Boden der eingefalteten Tasche ist insbesondere über ein Fangband mit dem zweiten freien Ende verbunden. Das Fangband liegt dabei im Inneren des Gassacks und bleibt bevorzugt auch im vollständig aufgeblasenen Zustand des Gassacks intakt.

Die Tasche kann zum einen zur aufgeblasenen Form des Gassacks beitragen und zum anderen, insbesondere über das Fangband, eine Stabilisierung und Positionierung des aufgeblasenen Gassacks in der gewünschten Position im Fahrzeuginnenraum unterstützen.

Während der Entfaltung des Gassacks aus dem Dachhimmel erstreckt sich der Gassack in einem teilaufgeblasenen Zustand, in dem das Fangband noch nicht gelöst ist, vorzugsweise längs der Windschutzscheibe bis zur Armaturentafel, wobei der Gassack vom zweiten freien Ende aus umgeschlagen ist und sich in Richtung zum Gasgenerator zurück erstreckt, sodass der Gassack eine U-förmige Gestalt mit einem äußeren und einem inneren Schenkel hat.

Der äußere Schenkel des U, der insbesondere der zur Windschutzscheibe gerichtete Schenkel ist, ist vorzugsweise zu dem Zeitpunkt, zu dem sich das Fangband löst, bereits teilweise mit Füllgas gefüllt, während der innere Schenkel Wesentlichen ungefüllt ist.

Dieser Zwischenzustand wird durch ein entsprechendes Zusammenlegen des Gassackpakets sowie durch das Fangband erreicht.

Das Hauptpaket ist, wie gesagt, so zusammengelegt, dass das erste freie Ende zum Einblasende zurückgefaltet ist. Außerdem können die beiden seitlichen Abschnitte des Rückhalteteils zur Mitte zurückgefaltet und anschließend aufgerollt sein. So wird erreicht, dass zuerst ein äußerer Schenkel des Gassacks, der sich vom Einblasende bis zu einem zweiten freien Ende des Gassacks erstreckt, das im aufgeblasenen Zustand in etwa im Übergang von der Windschutzscheibe zur Armaturentafel liegt, gefüllt wird. Dagegen strömt das Füllgas zunächst im Wesentlichen noch nicht in einen inneren Schenkel des Gassacks ein, der sich vom Einblasende zum ersten freien Ende des Gassacks erstreckt. Dies wird durch die Faltung des Rückhalteteils des Gassacks und das Fangband erreicht.

Der äußere Schenkel ist z.B. zur Windschutzscheibe hin durch den ersten Außenwandabschnitt begrenzt, und nach innen, also in Richtung zum Fahrzeuginsassen hin gesehen, durch einen gasgeneratorseitigen bzw. einblasendseitigen Teil des dritten Außenwandabschnitts begrenzt.

Hingegen ist der innere Schenkel z.B. zum Fahrzeuginsassen hin durch den zweiten Außenwandabschnitt begrenzt, und zur Windschutzscheibe hin gesehen durch einen zum ersten freien Ende hin verlaufenden Teil des dritten Außenwandabschnitts begrenzt.

Im voll aufgeblasenen Zustand hat der Gassack von der Seite gesehen in etwa eine Y- oder eine T-Form, da sich der innere Schenkel im Fahrzeuginnenraum nach unten geklappt hat. Die Arme des Y werden dann von zwei aufgeblasenen Abschnitten des Rückhalteteils gebildet, die sich jeweils vom ersten und vom zweiten freien Ende in Richtung zum Einblasende erstrecken und die beide in den Hals übergehen.

Das Fangband liegt während der Entfaltung auf der zum Fahrzeuginsassen gerichteten Seite. Auf diese Weise ist es möglich, die Befestigung des Fangbandes nicht auf der Prallfläche vornehmen zu müssen.

Während der Entfaltung des Gassacks erstreckt sich das Fangband, solange es intakt ist, insbesondere maximal etwa 5 bis 50 cm von einer Dachhimmelverkleidung des Fahrzeugs aus ins Fahrzeuginnere. Das Fangband ist somit so platziert, dass es normalerweise nicht in Kontakt mit einem Fahrzeuginsassen gelangt.

Es ist möglich, das Fangband gassackseitig nicht unmittelbar am ersten freien Ende zu befestigen, sondern insbesondere etwa 5 bis 30 cm in Längsrichtung des Gassacks vom ersten freien Ende versetzt, also auf dem zweiten Außenwandabschnitt. Somit weist die Prallfläche weder Reste des Fangbands noch eine Fangbandbefestigung auf.

Am Einblasende hat der Gassack vorzugsweise eine Einstecköffnung für den Gasgenerator, die durch zwei gegenüberliegende Lappen verschließbar ist, wobei jeder Lappen separat am Gasgenerator befestigbar ist. Dabei hat vorzugsweise jeder Lappen eine Befestigungsöffnung zur Aufnahme eines vom Gasgenerator abstehenden Befestigungsbolzens. Außerdem hat vorteilhaft jeder Lappen eine Positionierungsöffnung zur Aufnahme eines asymmetrisch am Gasgenerator angeordneten Positionierungsbolzens zur Vermeidung einer Fehlmontage des Gasgenerators am Gassack nach dem Poka-Yoke-Prinzip.

Das Fangband ist vorzugsweise mit einem gasgeneratorseitigen Ende am Gasgenerator fixiert. Insbesondere hat das gasgeneratorseitige Ende des Fangbands dieselbe Anordnung an Öffnungen wie die Lappen des Einblasendes des Gassacks und kann so auf dieselbe Weise über die Befestigungsbolzen (und den Positionierungsbolzen) des Gasgenerators gezogen werden, um das Fangband fest mit dem Gasgenerator zu verbinden.

Die oben angegebene Aufgabe wird auch durch ein Verfahren zum Zusammenlegen eines Gassacks eines Fahrzeuginsassen-Rückhaltesystems, wie es oben beschrieben wurde, gelöst. Im Verfahren sind die folgenden Schritte vorgesehen:
Der nicht aufgeblasene Gassack wird so ausgebreitet, dass ein zweites freies Ende vom Einblasende maximal entfernt ist und der erste Außenwandabschnitt in Längsrichtung des Gassacks gestreckt ist, sowie das erste freie Ende in der Nähe des Einblasendes liegt und ein zweiter Außenwandabschnitt in Längsrichtung des Gassacks ebenfalls gestreckt ist. Der dritte Außenwandabschnitt des Gassacks ist wenigstens in einem Abschnitt auf sich selbst zurückgefaltet.

Die beiden bezüglich der Längsrichtung des Gassacks seitlichen Bereiche des ausgebreiteten Gassacks werden in einem Faltschritt zur Mitte hin gefaltet, insbesondere in einer Z-Faltung mit jeweils zwei Faltlinien.

Anschließend wird der Gassack in einem Rollschritt vom zweiten freien Ende her aufgerollt und das Fangband im Bereich des Einblasendes fixiert.

Durch das Umlegen des ersten freien Endes und das Fixieren des ersten freien Endes durch das Fangband wird ein Befüllen des inneren Schenkels bis zum Lösen des Fangbands im Wesentlichen verhindert. Das Fangband hält vorzugsweise so lange, bis sich der Gassack vollständig entrollt hat. Das Aufrollen des Gassacks kann beispielsweise über etwa sechs Umdrehungen erfolgen.

Das Fangband kann vor oder nach dem Falten und Aufrollen des Rückhalteabschnitts des Gassacks am Gasgenerator fixiert werden.

Der Hals des Gassacks, der in das Einblasende übergeht, ist vorzugsweise vom Schritt des Aufrollens ausgenommen und ist rein in einer Zickzackfaltung, insbesondere mit einer bis drei Falten, gefaltet.

Abhängig von der Länge der Außenwandabschnitte ist es möglich, das erste freie Ende vor dem Aufrollschritt und vorzugswiese bereits vor dem Faltschritt einmal in Längsrichtung des Gassacks umzuschlagen, um ein kompakteres Gassackpaket zu erhalten.

In einer möglichen Konfiguration der Erfindung umfasst das Fahrzeuginsassen-Rückhaltesystem ein Gassackmodul, das im Bereich des Dachhimmels des Fahrzeugs auf der Beifahrerseite in Fahrzeugquerrichtung gesehen etwa mittig bezüglich des Beifahrersitzes montiert ist und einen zu einem Gassackpaket zusammengelegten Gassack aufweist, der sich im Rückhaltefall zwischen der Windschutzscheibe und dem Beifahrer entfaltet, um den Beifahrer frontal aufzufangen. Das Gassackpaket ist zwischen der Drehachse der Sonnenblende und der Windschutzscheibe des Fahrzeugs angeordnet.

Zur Befestigung des Gassackmoduls am Dachrahmen ist der Gasgenerator in einer im Querschnitt C-förmigen Aufnahme eines am Dachrahmen befestigten Modulträgers aufgenommen, wobei jedoch der fahrzeuginnenraumseitige Arm der C-förmigen Aufnahme nicht wesentlich über den Gasgenerator übersteht.

Das zusammengelegte Gassackpaket ist zusammen mit dem Gasgenerator in einer Umhüllung aufgenommen, die gasgeneratorseitig über zwei Haltelappen an den Befestigungsbolzen des Gasgenerators befestigt ist, während das Hauptpaket des zusammengelegten Gassackpakets in eine Aufnahmetasche gesteckt ist und dort über eine an der Umhüllung ausgebildete Gassackpaketfixierung gehalten wird. Die Gassackpaketfixierung weist ineinandergreifende erste und zweite Fixierelemente auf, die eine Steckverbindung bilden und die beide ausschließlich aus dem Material der Umhüllung, insbesondere einem Gassackgewebe, geformt sind. Der Verbindungsabschnitt liegt außerhalb der Aufnahmetasche und wird durch die Haltelappen im gefalteten Zustand fixiert. Zur Fixierung am Fahrzeug weist die Umhüllung einen oder mehrere Fixierabschnitte auf, über die auch eine Vorfixierung an der Fahrzeugkarosserie möglich ist, die eine genaue Positionierung des Gassackmoduls und ein bequemes Anbringen der lasttragenden Fixierungen erlaubt.

Im Boden der Aufnahmetasche der Umhüllung ist beispielsweise eine Schwächungszone vorgesehen, durch die das Hauptpaket des zusammengelegten Gassackpakets aus dem Gassackmodul austreten kann und sich aus der Dachhimmelverkleidung heraus in den Fahrzeuginnenraum entfalten kann.

Die Erfindung wird nachfolgend anhand eines Ausführungsbeispiels mit Bezug auf die beigefügten Figuren näher beschrieben. In den Figuren zeigen:
- Figur 1 eine schematische perspektivische Ansicht eines erfindungsgemäßen Fahrzeuginsassen-Rückhaltesystems, mit einem an einem Dach des Fahrzeugs montierten Gassackmodul;
- Figur 2 einen am Fahrzeugdach montierten Modulträger des Gassackmoduls aus Figur 1;
- Figur 3 eine Draufsicht auf das Gassackmodul aus Figur 1,
- Figur 4 die Darstellung aus Figur 3, bei der zusätzlich die Sonnenblende gezeigt ist;
- Figur 5 eine schematische Schnittansicht des im Fahrzeug eingebauten Fahrzeuginsassen-Rückhaltesystems aus Figur 1;
- Figur 6 eine schematische Explosionsdarstellung des Gassackmoduls aus Figur 1;
- Figur 7 eine schematische Draufsicht auf das am Dach montierte Gassackmodul aus Figur 1;
- Figuren 8 und 9 das Fahrzeuginsassen-Rückhaltesystem aus Figur 1 in einer schematischen Schnittansicht vor der Entfaltung des Gassacks und während der anfänglichen Entfaltungsphase des Gassacks;
- Figuren 10 bis 17 den Aufblasvorgang des Gassacks des Gassackmoduls aus Figur 1 vom Zustand vor der Aktivierung des Fahrzeuginsassen-Rückhaltesystems bis hin zum vollständig aufgeblasenen Gassack in einer schematischen Schnittansicht;
- Figur 18 eine schematische Schnittansicht des Gassacks des Fahrzeuginsassen-Rückhaltesystems aus Figur 1 mit eingesetztem Gasgenerator;
- Figur 19 den im nicht aufgeblasenen Zustand flach ausgebreiteten Gassack des Fahrzeuginsassen-Rückhaltesystems aus Figur 1 in einer Draufsicht auf einen dritten Außenwandabschnitt des Gassacks;
- Figuren 20 bis 23 eine schematische Darstellung des Einsetzens eines Gasgenerators in ein Einblasende des Gassacks des Fahrzeuginsassen-Rückhaltesystems aus Figur 1;
- Figuren 24 bis 27 Schritte des Zusammenlegens des Gassacks des Fahrzeuginsassen-Rückhaltesystems aus Figur 1, betrachtet in einer Draufsicht;
- Figur 28 eine schematische Darstellung des zusammengelegten Gassackpakets des Fahrzeuginsassen-Rückhaltesystems aus Figur 1;
- Figur 29 eine schematische perspektivische Darstellung des in eine Umhüllung eingesetzten Gassackpakets aus Figur 28;
- Figur 30 eine schematische Draufsicht auf die Umhüllung aus Figur 29;
- Figur 31 eine schematische perspektivische Darstellung der Umhüllung;
- Figuren 32 bis 34 das Einsetzen des Gassackpakets in die Umhüllung;
- Figur 35 Details der Gassackpaketfixierung der Umhüllung;
- Figur 36 das Gassackpaket in einer schematischen Schnittansicht, eingesetzt in eine Faltvorrichtung;
- Figuren 37 und 38 das Schließen einer Gasgenerator-Fixierung der Umhüllung;
- Figur 39 eine schematische Übersicht über ein alternatives Verfahren zum Einsetzen des Gassackpakets in die Umhüllung; und
- Figuren 40 bis 44 Schritte des alternativen Verfahrens zum Einsetzen des Gassackpakets in die Umhüllung in schematischer Darstellung.

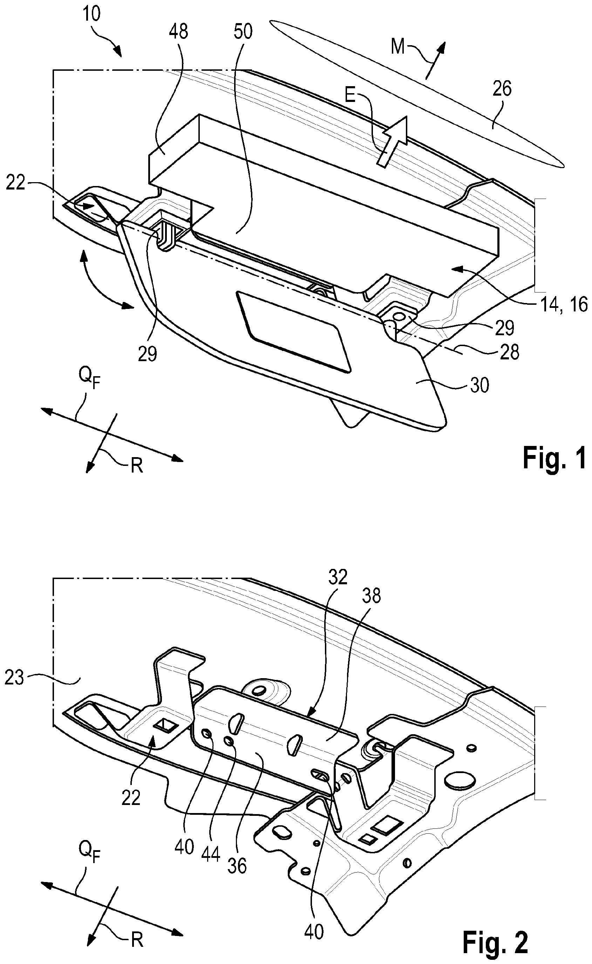

Die Figuren 1 bis 7 zeigen den Aufbau eines Fahrzeuginsassen-Rückhaltesystems 10, das in diesem Beispiel dafür ausgelegt ist, einen Beifahrer insbesondere eines Personenkraftwagens bei einem Frontalaufprall, zu schützen.

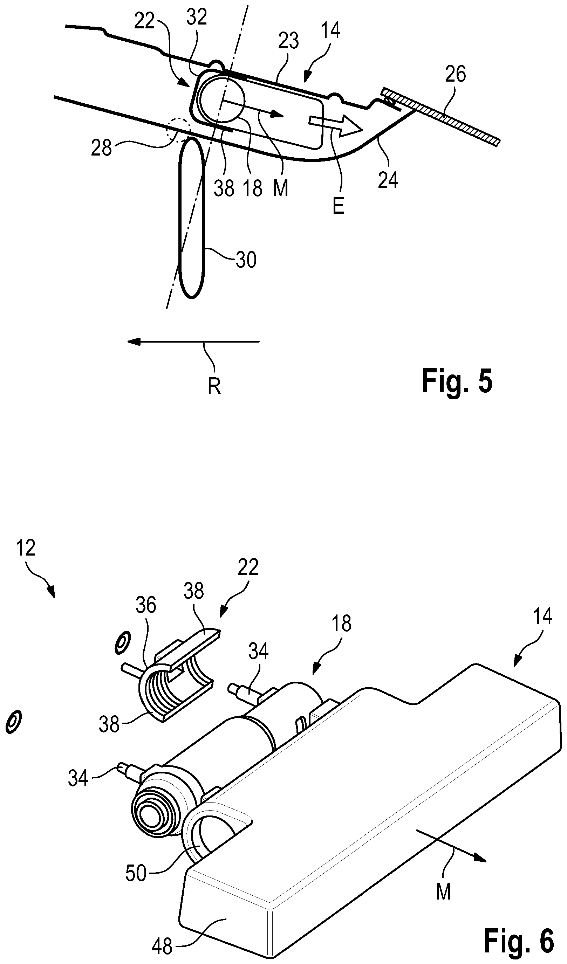

Das Fahrzeuginsassen-Rückhaltesystem 10 umfasst ein Gassackmodul 12 (siehe insbesondere Figuren 5 bis 7), das einen zu einem Gassackpaket 14 zusammengelegten frontal wirkenden Gassack 16 sowie einen Gasgenerator 18 umfasst, der Füllgas zum Aufblasen des Gassacks 16 liefert. Der Gasgenerator 18 ist in den Gassack 16 eingesetzt und somit in das Gassackpaket 14 integriert.

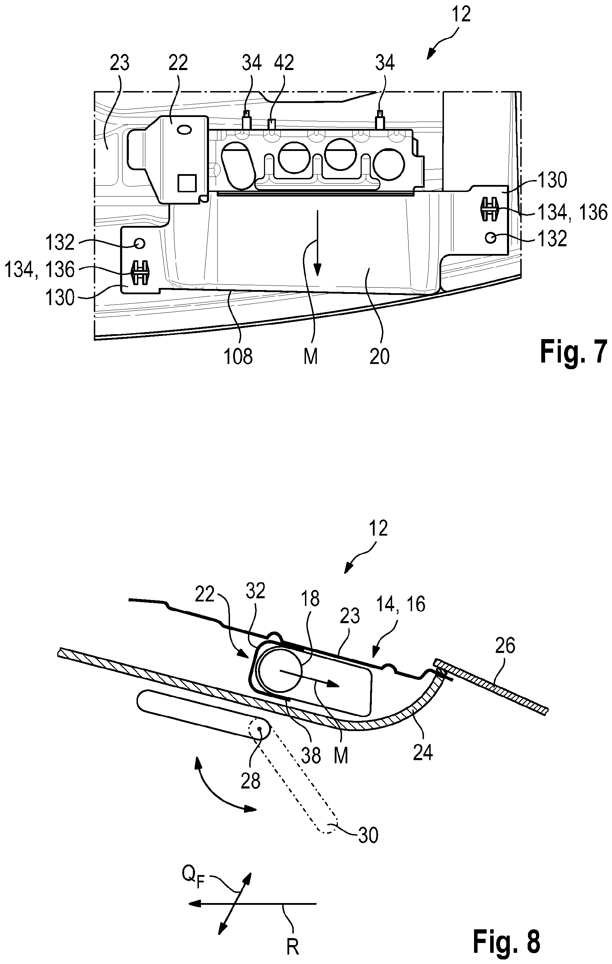

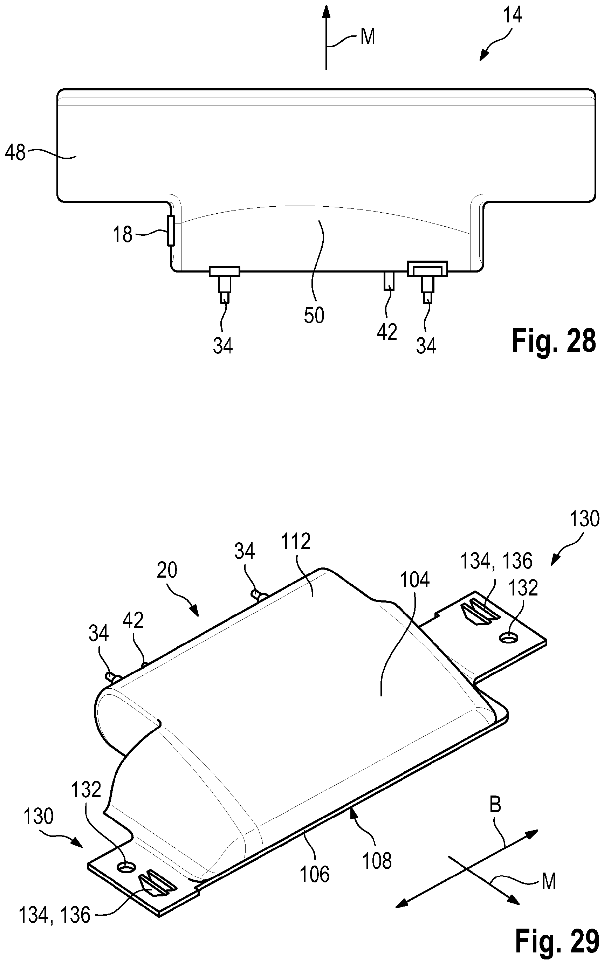

Das Gassackpaket 14 sowie der Gasgenerator 18 sind in einer flexiblen Umhüllung 20 aufgenommen (siehe z.B. Figuren 7 und 29), die weiter unten noch im Detail beschrieben ist und die in den Figuren 1 bis 6 aus Gründen der Übersichtlichkeit weggelassen wurde.

Außerdem ist ein Modulträger 22 vorgesehen (siehe beispielsweise Figuren 2 und 6), über den das Gassackmodul 12 fahrzeugfest montiert ist, beispielsweise an einem Dachrahmen 23 oder einem anderen starren Bauteil im Dachbereich des Fahrzeugs. Der Modulträger 22 ist z. B. ein Blechumformteil.

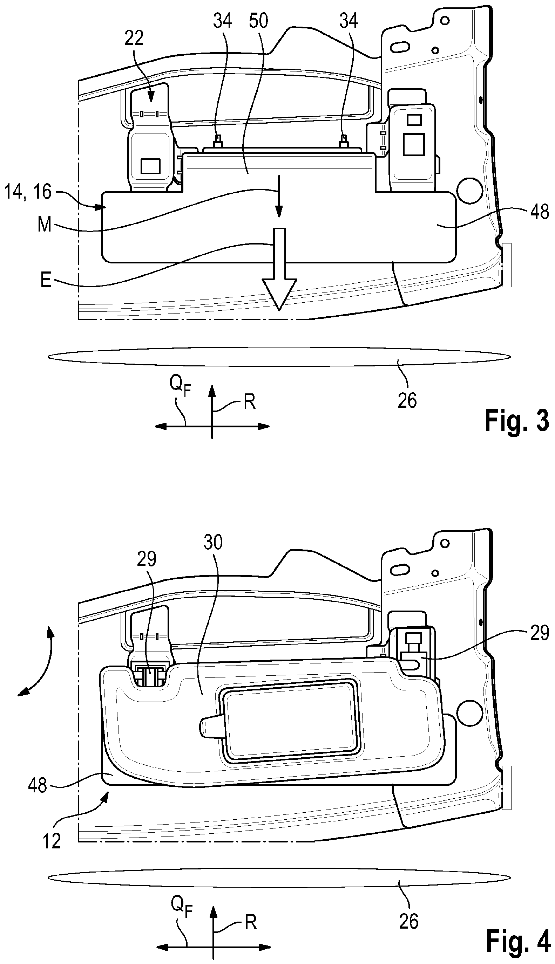

Das Gassackmodul 12 ist unterhalb einer Dachhimmelverkleidung 24 angeordnet (siehe beispielsweise Figur 5), wobei es entlang der Fahrzeuglängsrichtung R betrachtet zwischen einer Windschutzscheibe 26 des Fahrzeugs und einer Drehachse 28 bzw. den Aufhängungen 29 einer Sonnenblende 30 liegt. Die Sonnenblende 30 kann um die Drehachse 28 wie z.B. in Figur 1 angedeutet verschwenkt werden. Die Drehachse 28 ist nicht durchgehend physikalisch verwirklicht. Stattdessen ist die Sonnenblende 30 an zwei Aufhängungen 29 schwenkbar am Dachhimmel befestigt (siehe Figuren 1 und 4), wobei in der Regel die Sonnenblende 30 an der fahrzeuginneren der beiden Aufhängungen 29 ausgehakt werden kann, um sie seitlich wegzuklappen.

Zumindest das zusammengelegte Gassackpaket 14 und gegebenenfalls auch der Gasgenerator 18 liegen in Fahrzeugrichtung R, gesehen von der Fahrzeugfront zum Fahrzeugheck vor der Drehachse 28 der Sonnenblende 30.

Eine Entfaltungsrichtung E des Gassacks 16 ist entlang der Fahrzeuglängsrichtung R in Richtung zur Fahrzeugfront gerichtet und verläuft anfänglich in etwa parallel zum Fahrzeugdach und der Windschutzscheibe 26.

Das Gassackmodul 12 liegt in Fahrzeugquerrichtung Q_{F} betrachtet auf der Beifahrerseite in etwa mittig über einem Beifahrersitz (nicht dargestellt), sodass der Gassack 16 den Beifahrer frontal auffangen kann. Das Gassackmodul 12 ist also in Fahrzeugquerrichtung Q_{F} entfernt von den Fahrzeugtüren angeordnet.

Der Modulträger 22 hat eine im Querschnitt C-förmige Aufnahme 32, die den Gasgenerator 18 an der gasgeneratorseitigen Endseite des Gassackpakets 14 umgreift.

Der Gasgenerator 18 ist hier ein bekannter langgestreckter Rohrgasgenerator, von dessen zylindrischer Außenseite zwei Befestigungsbolzen 34 radial abstehen. Die Befestigungsbolzen 34 liegen auf einer Rückseite des Gasgenerators 18, auf der gegenüberliegenden Frontseite sind (nicht dargestellte) Ausströmöffnungen vorgesehen, durch die das Füllgas den Gasgenerator 18 verlässt und direkt in den Gassack 16 gelangt.

Der Gasgenerator 18 ist so im Gassackmodul 12 angeordnet, dass seine Längsachse quer zur Fahrzeuglängsrichtung R in etwa in Fahrzeugquerrichtung Q_{F} und somit in etwa senkrecht zu einer Modullängsrichtung M und der Entfaltungsrichtung E des Gassacks 16 verläuft. Die Modullängsrichtung M lässt sich in etwa durch eine Verlängerung eines Durchmessers des Gasgenerators 18 definieren, der durch die Befestigungsbolzen 34 gelegt ist.

Im Modulträger 22, genauer gesagt in einer Längsseite 36 der C-förmigen Aufnahme 32, die zwischen den beiden Armen 38 des C liegt, sind Befestigungsöffnungen 40 (siehe Figur 2) vorgesehen, durch die die Befestigungsbolzen 34 hindurchgreifen, um den Gasgenerator 18 und das Gassackpaket 14 fest am Modulträger 22 zu befestigen. Rückseitig können die Befestigungsbolzen 34 beispielsweise mit Muttern gesichert werden.

Zusätzlich zu den beiden Befestigungsbolzen 34 ist ein weiterer Bolzen vorgesehen, der einen Positionierungsbolzen 42 bildet (siehe beispielsweise Figur 7). Eine korrespondierende Öffnung 44 ist im Modulträger 22 vorgesehen (siehe Figur 2). Dieser Positionierungsbolzen 42 dient nach dem Poka-Yoke-Prinzip dazu, eine Fehlmontage des Gasgenerators 18 zu verhindern.

Bei der Entfaltung des Gassacks 16 strömt Füllgas vom Gasgenerator 18 durch ein Einblasende 46 in den Gassack 16 ein, das am Gasgenerator 18 befestigt ist, wie weiter unten im Detail beschrieben wird. Durch den Druck des sich befüllenden Gassacks 16 öffnet sich die Dachhimmelverkleidung 24 entweder an einer Schwächungszone oder beispielsweise am Übergang zur Windschutzscheibe 26 und lässt den Gassack 16 in den Fahrzeuginnenraum austreten. Dabei bildet die Dachhimmelverkleidung 24 eine untere Begrenzung eines Schusskanals für den Gassack 16. Eine obere Begrenzung dieses Schusskanals kann durch den Dachrahmen 23 vorgegeben sein. Zwischen dem Gassack 16 und der Dachhimmelverkleidung 24 befindet sich in diesem Beispiel kein weiteres starres Führungsteil wie etwa eine Führungsplatte.

Der fahrzeuginnenraumseitige Arm 38 der C-förmigen Aufnahme 32 erstreckt sich in Fahrzeuglängsrichtung R nicht über die Außenwand des Gasgenerators 18 hinaus und erhöht lediglich die Stabilität des Modulträgers 22, sodass dieser sich während der Entfaltung des Gassacks 16 nur unwesentlich verformt, trägt aber nicht zur Lenkung des Gassacks 16 durch direkten Kontakt mit dem Gassack 16 bei.

Aufgrund seiner Position am Dachrahmen 23 kommt der sich entfaltende Gassack 16 auch nicht mit der Sonnenblende 30 oder deren Aufhängung 29 in Kontakt, während er in den Fahrzeuginnenraum austritt.

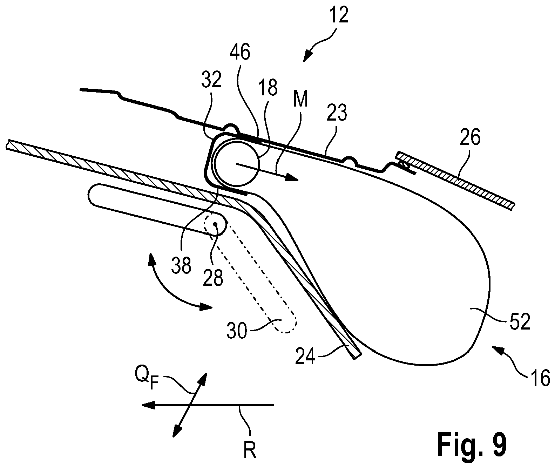

Die anfängliche Entfaltung des Gassacks 16 ist in den Figuren 8 und 9 verdeutlicht.

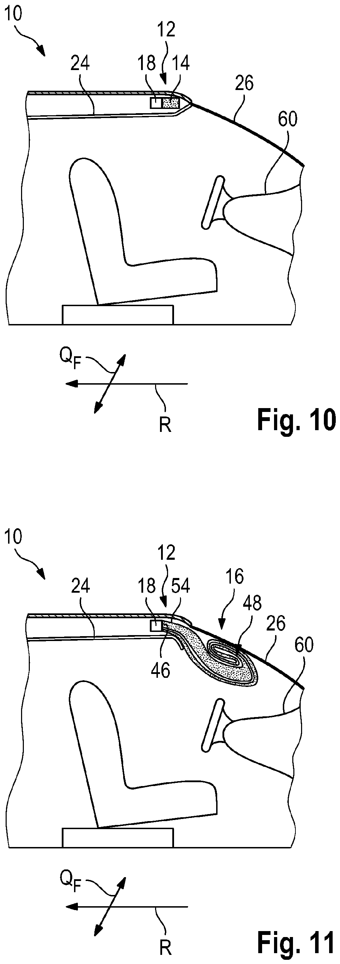

Die Figuren 10 bis 17 zeigen die Entfaltung und das Aufblasen des Gassacks 16 in größerem Detail. Auch wenn in den Figuren 11 bis 17 das Lenkrad zu sehen ist, liegt dies nur an der zu Darstellung gewählten Seitenansicht. Der Gassack 16 entfaltet sich ausschließlich auf der Beifahrerseite in diesem Beispiel, und seitlich neben dem Lenkrad.

Figur 10 stellt dabei den Ausgangszustand vor der Aktivierung des Fahrzeuginsassen-Rückhaltesystems 10 dar.

Das Gassackpaket 14 liegt zunächst zusammengelegt unterhalb der geschlossenen Dachhimmelverkleidung 24. Das Gassackpaket 14 umfasst zwei separat zusammengelegte bzw. gefaltete Abschnitte, nämlich ein Hauptpaket 48 sowie einen Verbindungsabschnitt 50 (angedeutet beispielsweise in den Figuren 1 und 3).

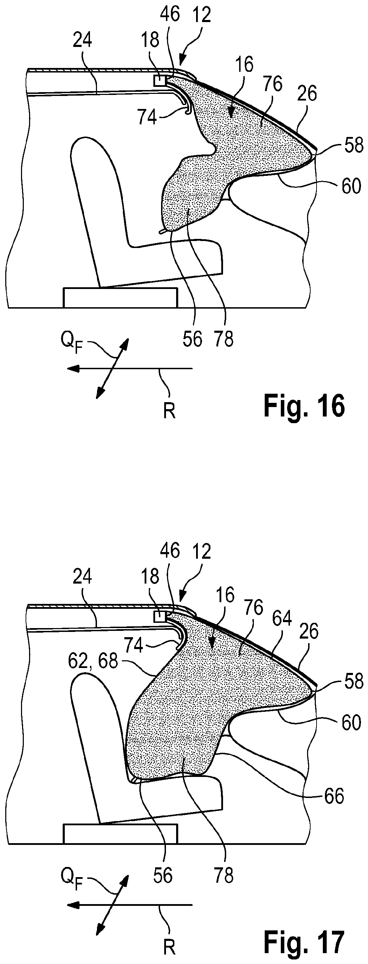

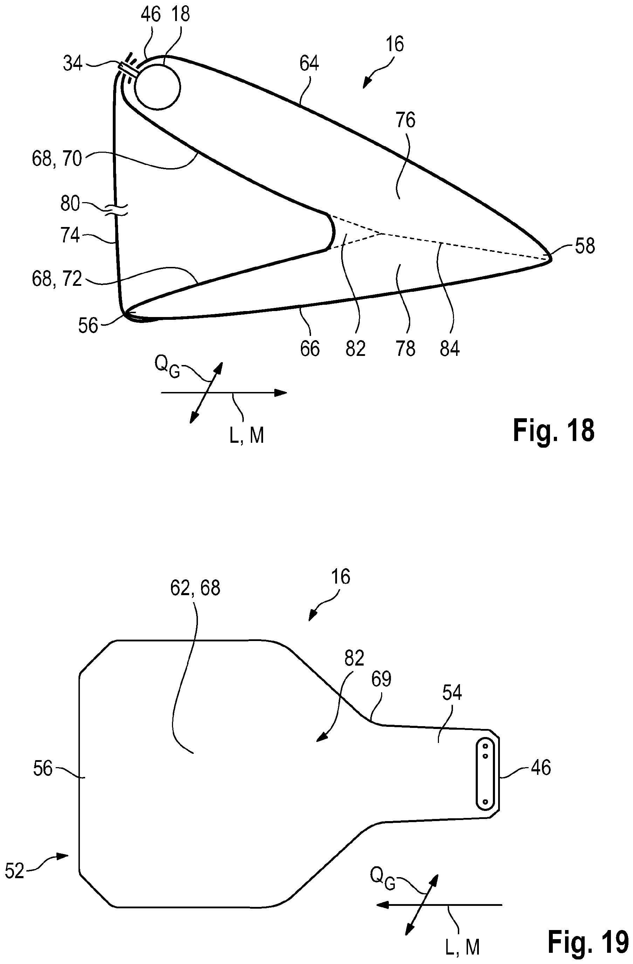

Im Hauptpaket 48 ist ein Rückhalteteil 52 des Gassacks 16 zusammengelegt, der im entfalteten und aufgeblasenen Zustand den Großteil des Gassackvolumens umfasst und der im Wesentlichen die Rückhaltewirkung des Gassacks 16 bestimmt. Dies ist in z.B. in den Figuren 17 und 19 zu erkennen.

Im Verbindungsabschnitt 50 ist ein Hals 54 des Gassacks 16 gefaltet, der zwischen dem Einblasende 46 und dem Rückhalteteil 52 ausgebildet ist (siehe auch Figur 19). In diesem Beispiel beträgt die Länge des Halses 54 in etwa 5 - 40 cm, wobei sich die exakte Länge vom Fachmann einfach an die Gegebenheiten im Fahrzeug, beispielsweise die Länge des Schusskanals und die Position der Prallfläche des Gassacks 16 im aufgeblasenen Zustand, anpassen lässt.

In Querrichtung Q_{G} des Gassacks 16 senkrecht zu dessen Längsrichtung L (siehe z.B. Fig. 19) bzw. zur Modullängsrichtung M ist der Hals 54 deutlich schmaler als der Rückhalteteil 52. Beispielsweise beträgt die Breite des Halses 54 etwa 25 - 50 % der maximalen Breite des flach ausgebreiteten Rückhalteteils 52. Somit ist das Füllvolumen des Halses 54 deutlich kleiner als das des Rückhalteteils 52.

Der Hals 54 trägt in diesem Ausführungsbeispiel nicht zur Rückhaltewirkung bei, da er hoch oben im Fahrzeug unmittelbar am Dachhimmel ansetzt. Durch die Verringerung des Volumens des Halses 54 durch die Reduzierung seiner Breite lassen sich somit Material, Füllgas und Platz im Gassackmodul 12 einsparen.

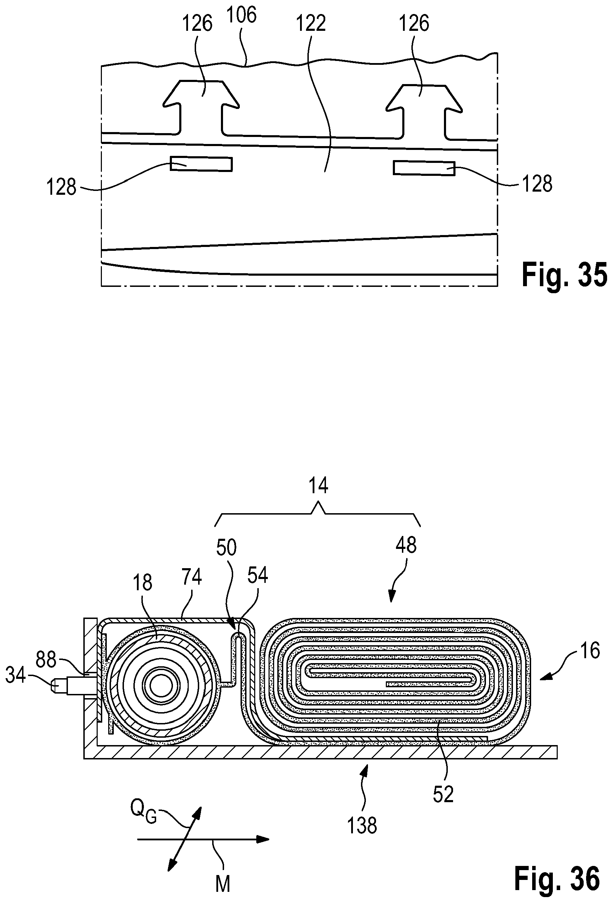

Der Verbindungsabschnitt 50 und das Hauptpaket 48 stellen zwei separat voneinander gefaltete Abschnitte des Gassackpakets 14 dar, wie beispielsweise in Figur 36 zu erkennen ist.

Während das Hauptpaket 48 beispielsweise gefaltet und gerollt ist, wie später noch näher erläutert wird, ist der Verbindungsabschnitt 50 hier lediglich in einer Zickzackfaltung mit in diesem Beispiel einer bis drei Falten zusammengelegt. Die Falten liegen dabei in der Modullängsrichtung M hintereinander aufgereiht.

In Modullängsrichtung M liegen der Gasgenerator 18, der Verbindungsabschnitt 50 und das Hauptpaket 48 linear hintereinander.

Durch diese Anordnung gelangt Füllgas vom Gasgenerator 18 zunächst in den im Verbindungsabschnitt 50 zusammengelegten Hals 54. Durch die reine Zickzackfaltung füllt sich eine Falte nach der anderen, was dazu führt, dass sich der Verbindungsabschnitt 50 streckt und somit eine in Modullängsrichtung M wirkende Kraft auf das noch gefaltete Hauptpaket 48 ausübt.

Dies führt dazu, dass das Hauptpaket 48 die Dachhimmelverkleidung 24 aufdrückt und noch im Wesentlichen gefaltet in den Fahrzeuginnenraum geschoben wird. Diese Situation ist in Figur 11 schematisch dargestellt.

In das Hauptpaket 48 gelangt zu diesem Zeitpunkt noch im Wesentlichen kein Gas, da der Gasfluss durch die noch bestehenden Falten des Verbindungsabschnitts 50 blockiert wird.

Auch wenn diese Falttechnik und das Ausschieben des Hauptpakets 48 in den Fahrzeuginnenraum hier im Zusammenhang mit einem am Dach befestigten Gassackmodul 12 beschrieben ist, lässt sich diese Technik erfindungsgemäß auf Gassackmodule übertragen, die an anderen Stellen im Fahrzeug verwendet werden, beispielsweise im Kniebereich oder in einer Sitzlehne.

Der vollständig aufgeblasene Gassack 16 hat in Seitenansicht in etwa eine Y- oder T-Form (siehe Figur 17), wobei der Stiel des Y oder T durch das Einblasende 46 und den Hals 54 gebildet wird. Der Rückhalteteil 52 umfasst ein erstes freies Ende 56 sowie ein zweites freies Ende 58. Dies ist für den aufgeblasenen Gassack 16 in Figur 17 zu erkennen, und für den nicht aufgeblasenen, flach ausgebreiteten Gassack 16 in z.B. in Figur 18, die den nicht aufgeblasenen Gassack 16 in einer seitlichen Schnittansicht zeigt, wobei die normalerweise flach aufeinanderliegenden Lagen aus Gründen der Übersichtlichkeit etwas auseinandergezogen dargestellt sind.

Im vollständig aufgeblasenen Zustand liegt das zweite freie Ende 58 in einem Übergang zwischen der Windschutzscheibe 26 und einer Armaturentafel 60 des Fahrzeugs, während sich das erste freie Ende 56 in Richtung zum Fahrzeuginsassen erstreckt und ein unteres Ende des Gassacks 16 insgesamt sowie einer Prallfläche 62 zum Auffangen des Fahrzeuginsassen bildet.

Der Gassack 16 weist im Wesentlichen drei große Außenwandabschnitte 64, 66, 68 auf (siehe Figur 18). Ein erster Außenwandabschnitt 64 erstreckt sich vom Einblasende 46 zum zweiten freien Ende 58 und bildet im aufgeblasenen Zustand eine Abstützfläche für den Gassack 16 an der Windschutzscheibe 26. Ein zweiter Außenwandabschnitt 66 erstreckt sich vom zweiten freien Ende 58 zum ersten freien Ende 56 und liegt im aufgeblasenen Zustand über der Armaturentafel 60. Ein dritter Außenwandabschnitt 68 erstreckt sich vom ersten freien Ende 56 zum Einblasende 46 und bildet im aufgeblasenen Zustand des Gassacks 16 die Prallfläche 62 für den Fahrzeuginsassen.

Der Hals 54 geht im dritten Außenwandabschnitt 68 einer Schulter 69 über in den Rückhalteteil 52 in, die auf beiden Seiten abgeschrägt ist, sodass ein stetiger Übergang vom Hals 54 in die Prallfläche 62 gebildet ist (siehe Figur 19).

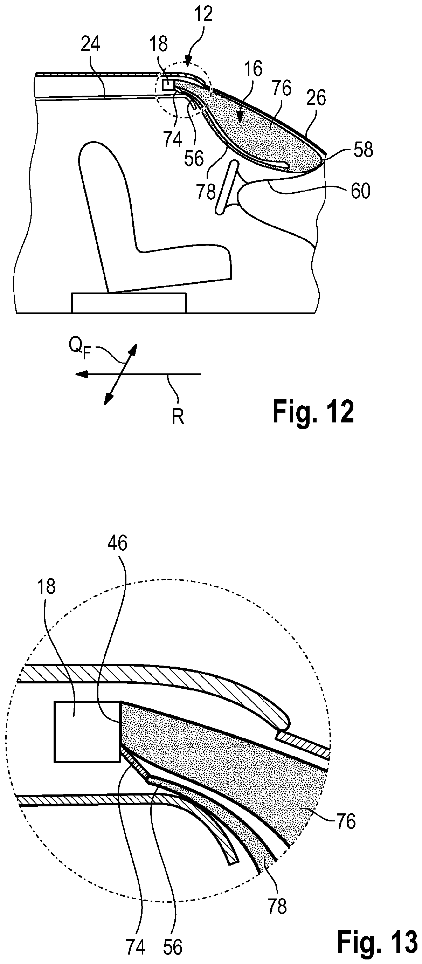

Im zusammengelegten Hauptpaket 48 ist jedoch das erste freie Ende 56 in Richtung zum Einblasende 46 zurückgefaltet, sodass Abschnitte 70, 72 des dritten Außenwandabschnitts 68 auf sich selbst zurückgefaltet sind. Dabei ist anfänglich das freie Ende 56 mit dem Einblasende 46 durch ein Fangband 74 verbunden. Im Detail ist dies in den Figuren 12, 13 und 18 dargestellt.

Das Fangband 74 ist in diesem Beispiel nicht direkt am ersten freien Ende 56 fixiert, sondern etwa 5 - 20 cm versetzt auf dem zweiten Außenwandabschnitt 66. Dies erlaubt eine kompaktere Faltung des Gassackpakets 14, wie später noch beschrieben wird.

Dies, sowie die später noch im Detail beschriebene Faltung des Hauptpakets 48, sorgen dafür, dass zu dem Zeitpunkt, in dem das Hauptpaket 48 in den Fahrzeuginnenraum gelangt, das erste freie Ende 56 noch durch das Fangband 74 im Dachbereich zurückgehalten wird. Der Rest des Hauptpakets 48 entfaltet sich derweil weiter im Fahrzeuginnenraum, wobei das in den Gassack 16 einströmende Füllgas zuerst nur einen Teilbereich des Gassacks 16 aufbläst.

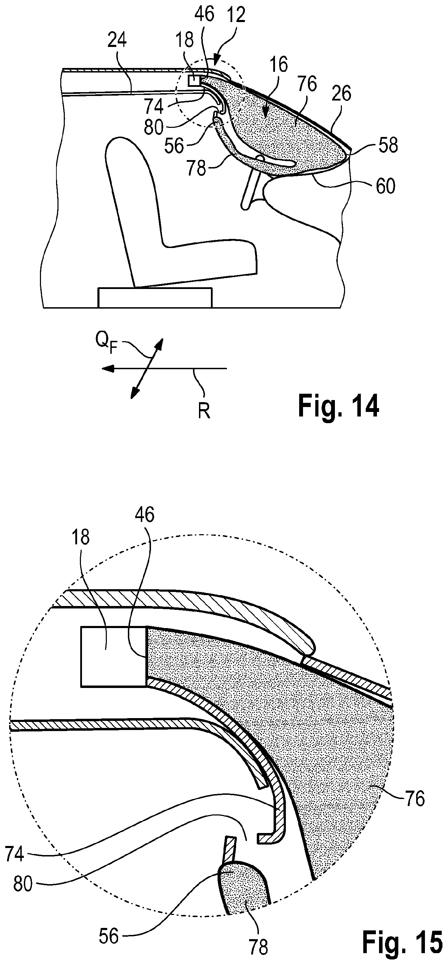

In den Figuren 14 und 18 ist zu erkennen, dass der Gassack 16 zu diesem Zeitpunkt, in dem das erste freie Ende 56 noch über das Fangband 74 mit dem Einblasende 46 verbunden ist, in etwa eine U-Form mit einem inneren Schenkel 76 und einem äußeren Schenkel 78 einnimmt.

Der innere Schenkel 76 des U wird durch den ersten Außenwandabschnitt 64 des Gassacks 16 zur Windschutzscheibe 26 hin begrenzt. Zum Fahrgastinnenraum wird der innere Schenkel 76 durch einen oberen Abschnitt 70 des dritten Außenwandabschnitts 68 begrenzt.

Der äußere Schenkel 78 wird zur Armaturentafel 60 hin durch den zweiten Außenwandabschnitt 66 begrenzt. Zum Fahrzeuginnenraum wird der äußere Schenkel 78 durch einen unteren Abschnitt 72 des dritten Außenwandabschnitts 68 begrenzt.

Die beiden Abschnitte 70, 72 des dritten Außenwandabschnitts 68 werden durch das Fangband 74 anfänglich zusammengehalten. Auf diese Weise strömt Füllgas nur in den inneren Schenkel 76 ein, während der äußere Schenkel 78 noch im Wesentlichen ungefüllt bleibt, obwohl sich das Gassackpaket 14 bereits weitgehend entfaltet hat. Diese Situation ist in den Figuren 12 - 15 gezeigt.

Bei Überschreiten einer bestimmten Zugkraft, die mit einem vorgegebenen Füllvolumen des Gassacks 16 einhergeht, löst sich nach einem ersten Zeitraum nach der Aktivierung des Gasgenerators 18 das Fangband 74. In diesem Beispiel ist hierzu auf der Fläche des Fangbands 74 eine Schwächungszone 80 ausgebildet (siehe Figur 18).

Zu dem Zeitpunkt, in dem sich das Fangband 74 löst, ist in diesem Beispiel der Hals 54 bereits vollständig aufgeblasen (siehe Figur 16).

In einem zweiten Zeitraum, der auf den ersten Zeitraum folgt, füllt sich der Gassack 16 vollständig, nachdem sich das Fangband 74 an der Schwächungszone 80 in zwei Teile geteilt hat. Der vollständig aufgeblasene Zustand ist in Figur 17 dargestellt.

Im voll aufgeblasenen Zustand hat der Gassack 16 von der Seite gesehen in etwa eine Y- oder eine T-Form, da sich der innere Schenkel 78 im Fahrzeuginnenraum nach unten geklappt hat. Die Arme des Y werden dann von zwei aufgeblasenen Abschnitten des Rückhalteteils 52 gebildet, die sich jeweils vom ersten und vom zweiten freien Ende 56, 58 in Richtung zum Einblasende 46 erstrecken und die beide in den Hals 54 übergehen.

Außerdem ist im dritten Außenwandabschnitt 68 eine im gefalteten Zustand eingestülpte Tasche 82 (siehe Figur 18) ausgebildet, die sich im voll aufgeblasenen Gassack 16 teilweise nach außen wölbt und somit die Prallfläche 62 vergrößert. Ein unteres Ende der Tasche 82 ist jedoch über ein inneres Fangband 84 permanent mit dem zweiten freien Ende 58 verbunden, um die Form des aufgeblasenen Gassacks 16 zu stabilisieren.

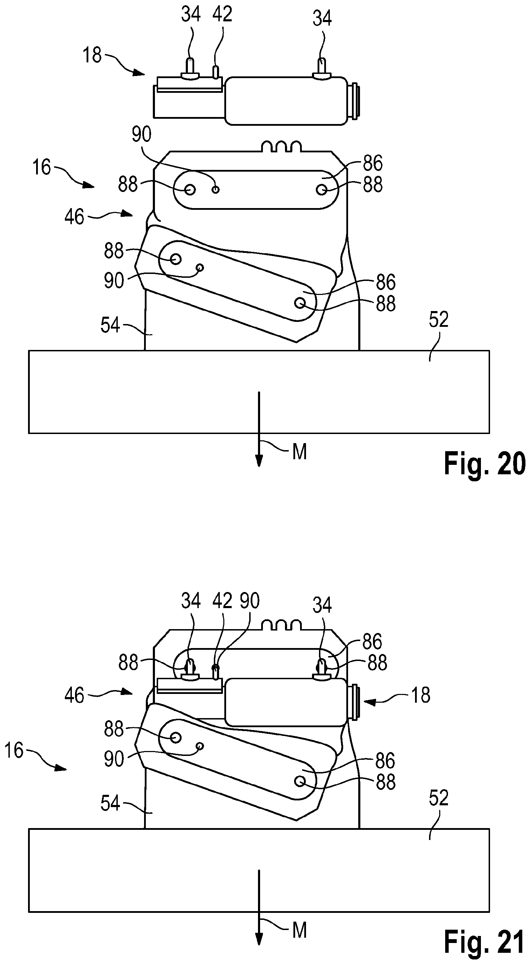

Bevorzugt wird vor dem Zusammenlegen des Gassacks 16 der Gasgenerator 18 am Einblasende 46 im Gassack 16 fixiert, wie in den Figuren 20 bis 23 gezeigt ist. Dieser Schritt könnte gegebenenfalls aber auch nach dem Zusammenlegen des Gassacks 16 erfolgen.

Am Einblasende 46 endet der Gassack 16 in zwei gegenüberliegenden Lappen 86, die sich jeweils über die gesamte Breite des Halses 54 erstrecken. Jeder der Lappen 86 weist zwei Befestigungsöffnungen 88 sowie eine Positionierungsöffnung 90 auf, die in ihrer Anordnung mit den Befestigungsbolzen 34 und dem Positionierbolzen 42 am Gasgenerator 18 übereinstimmen (siehe z.B. Figur 20).

Im Inneren des Gassacks 16 können die beiden Lappen 86 jeweils mit einer oder mehreren Verstärkungslagen verstärkt sein, die gegebenenfalls auch eine temperaturbeständige und gasdichte Beschichtung aufweisen können.

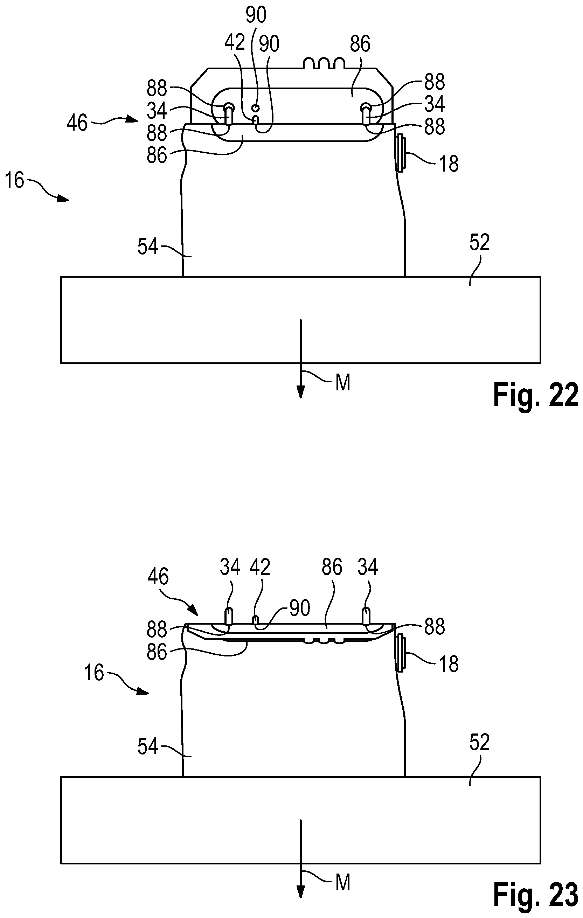

Zur Montage des Gasgenerators 18 wird dieser zwischen die beiden Lappen 86 gelegt (Figur 21) und dann die beiden Lappen 86 einzeln über den Gasgenerator 18 geschlagen, wobei jeweils die Befestigungsöffnung 88 über die Befestigungsbolzen 34 und die Positionieröffnung 90 über den Positionierbolzen 42 gezogen wird (Figuren 22 und 23).

Aufgrund der Umschlingung durch die beiden Lappen 86 und gegebenenfalls der an der Innenseite der Lappen 86 vorgesehenen Beschichtung ist das gasgeneratorseitige Einblasende 46 des Gassacks 16 nun in ausreichendem Maße gasdicht verschlossen.

Die Lappen 86 werden nun noch mittel Klemmscheiben und/oder Schraubmuttern an den Befestigungsbolzen 34 gesichert (nicht dargestellt).

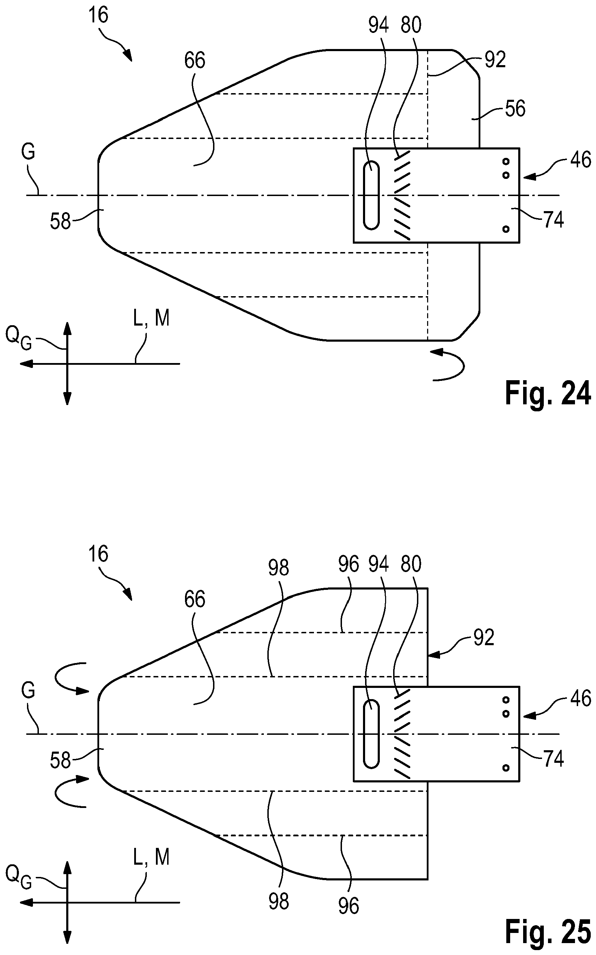

Um den Gassack 16 zum Gassackpaket 14 zusammenzulegen, wird der Gassack 16 zunächst wie in Figur 24 gezeigt flach ausgebreitet, wobei das erste Ende 56 zum Einblasende 46 zurückgeschlagen ist.

Im Bereich des ersten freien Endes 56 liegen somit die beiden Schenkel 76, 78 des Gassacks 16 übereinander. Der dritte Außenwandabschnitt 68 ist dabei in den Abschnitten 70, 72 auf sich selbst zurückgefaltet.

Der erste Außenwandabschnitt 64 und der zweite Außenwandabschnitt 66 verlaufen dagegen gestreckt jeweils vom zweiten freien Ende 58 zum Einblasende 46.

Das Fangband 74 wird so gelegt, dass sein freies Ende auf dem Einblasende 46 liegt.

In einem ersten Faltschritt wird nun das erste freie Ende 56 um eine senkrecht zur Gassacklängsrichtung L (die im flach ausgebreiteten Gassack 16 mit der Modullängsrichtung M zusammenfällt) liegende Faltlinie 92 einmal umgeschlagen, jedoch nicht über einen Ansatzpunkt 94 des Fangbands 74 auf dem zweiten Außenwandabschnitt 66 (siehe Figuren 24 und 25). Abhängig von der Form des Gassacks könnte dieser Faltschritt auch weggelassen werden.

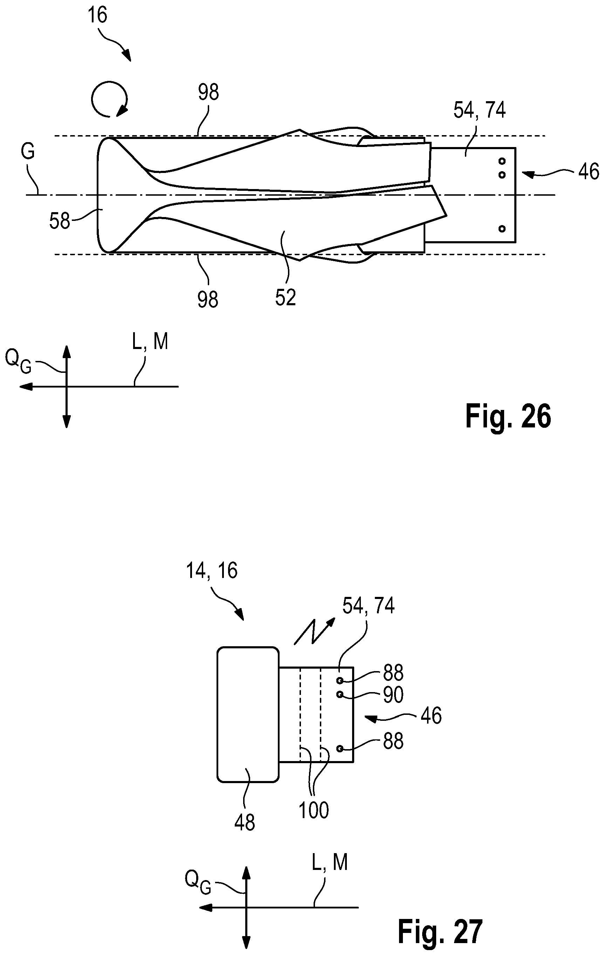

Nun werden in einem zweiten Faltschritt die beiden seitlichen Bereiche des Gassacks 16 entlang von parallel zur Gassacklängsrichtung L laufenden Faltlinien 96, 98 in einer Zickzackfalte nach innen geschlagen. Dies zeigen Figuren 25 und 26. Die beiden Faltlinien 98 begrenzen nun den Gassack 16 in Querrichtung Q_{G} seitlich nach außen.

Der Abstand der Faltlinien 96, 98 zueinander und zu einem Umfangsrand des Gassacks 16 ist so gewählt, dass in der Mitte des Gassacks kein Überlapp der seitlichen Bereiche des Gassacks 16 entsteht, wobei die Mitte des Gassacks 16 durch eine gedachte Mittelgerade G definiert ist, die vom Einblasende 46 zum zweiten freien Ende 58 verläuft und die symmetrisch zum Einblasende 46 angeordnet ist.

Im ausgebreiteten Zustand kann der Gassack 16 symmetrisch bezüglich dieser Mittelgeraden G sein, dies ist aber nicht zwingend erforderlich, sondern wird unter anderem durch die Geometrie des Fahrgastinnenraums, der Windschutzscheibe 26 und der Armaturentafel 60 bestimmt.

Der in Figur 26 dargestellte teilgefaltete Gassack 16 wird nun in einem Rollschritt angefangen vom zweiten freien Ende 58 her aufgerollt, beispielsweise in drei bis zehn Umdrehungen, insbesondere in sechs Umdrehungen, in Richtung zum Einblasende 46. Das Resultat dieses Faltschrittes ist in Figur 27 gezeigt. Der aufgerollte Bereich bildet nun das Hauptpaket 48. Aufgerollt wird der Gassack 16 dabei nur bis zum Ende des Rückhalteteils 52 des Gassacks 16. Der Bereich des Halses 54 und des Fangbands 74, die in Richtung zum Einblasende 46 darüber hinausstehen (siehe Figuren 26 und 27), bleiben von diesem Faltschritt unberührt.

In einem weiteren Faltschritt wird nun der über das Hauptpaket 48 überstehende Bereich des Halses 54 sowie gegebenenfalls des Fangbands 74 in eine reine Zickzackfaltung mit etwa ein bis drei Falten gelegt, wobei die Faltlinien 100 senkrecht zur Modulrichtung M und somit parallel zu einer Längsachse des Gasgenerators 18 (hier nicht dargestellt) ausgerichtet sind. Nun hat das zusammengelegte Gassackpaket 14 die in den Figuren 27 und 36 dargestellte Gestalt.

Die gleiche Lochstruktur 88, 90 wie an den Lappen 86 des Gassacks 16 ist auch am freien Ende des Fangbands 74 verwirklicht, und auch das Fangband 74 wird mit den Befestigungsöffnungen 88 und der Positionierungsöffnung 90 über die Befestigungsbolzen 34 und den Positionierungsbolzen 42 gezogen (siehe auch Figur 36). Die beiden Lappen 86 und das Fangband 74 liegen nun in drei Lagen übereinander, wobei die Befestigungsbolzen 34 des Gasgenerators 18 alle drei fluchtenden Befestigungsöffnungen 88 durchgreifen. Gleiches gilt für Positionierungsöffnungen 90.

Im eingebauten Zustand ist der Gassack 16 über die Befestigungsbolzen 34 lasttragend mit dem Modulträger 22 verbunden. Auch die auf das Fangband 74 wirkenden Zugkräfte werden über die Befestigungsbolzen 34 auf den Modulträger 22 übertragen.

Nach dem Einsetzen des Gasgenerators 18 und dem Zusammenlegen des Gassacks 16 hat das Gassackpaket 14 die in Figur 28 dargestellte Form.

Nachdem der Gasgenerator 18 im Gassack 16 fixiert wurde und der Gassack 16 zum Gassackpaket 14 zusammengelegt wurde, wird das Gassackpaket 14 zusammen mit dem Gasgenerator 18 in die Umhüllung 20 eingesetzt.

Die Figuren 29 bis 35 zeigen die Umhüllung 20 im Detail.

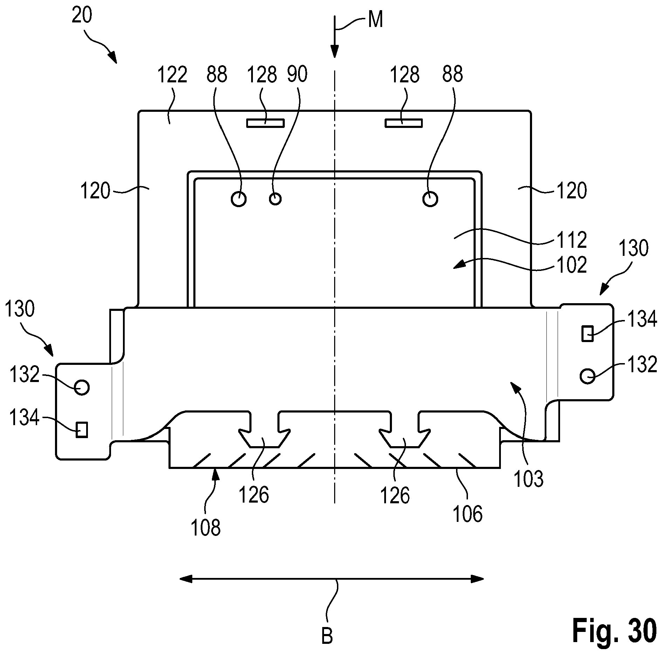

In diesem Beispiel besteht die Umhüllung 20 vollständig (natürlich mit Ausnahme von eventuellen Nähten) aus Gassackgewebe und ist aus exakt zwei Zuschnittsteilen 102, 103 zusammengesetzt (siehe Figur 30).

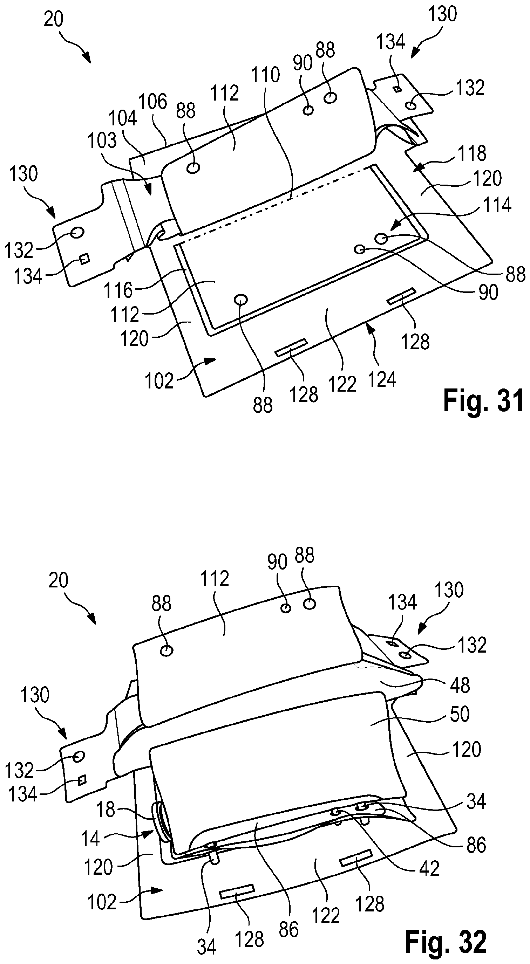

Die Umhüllung 20 weist eine Aufnahmetasche 104 (siehe Figur 31) auf, die durch zwei übereinandergeschlagene Abschnitte des ersten Zuschnittsteils 102 gebildet ist und die zur Aufnahme des Hauptpakets 48 des Gassackpakets 14 dient. Ein Boden 106 der Aufnahmetasche 104 ist mit einer Schwächungszone 108 versehen (siehe beispielsweise Figur 30) und erstreckt sich in einer Richtung B senkrecht zur Modulrichtung M.

Die beiden vom Boden 106 abgewandten Ränder 110 (siehe Figur 31) der Aufnahmetasche 104 gehen einstückig und nahtlos in jeweils einen Haltelappen 112 über. Die beiden Haltelappen 112 bilden eine Gasgeneratorfixierung 114 zur Fixierung des Gasgenerators 18 in der Umhüllung 20 und weisen an ihren freien Enden jeweils ein Öffnungsmuster auf, das der Anordnung der Befestigungsbolzen 34 und des Positionierungsbolzens 42 entspricht. Entsprechend sind am freien Rand jedes Haltelappens 112 zwei Befestigungsöffnungen 88 sowie eine Positionierungsöffnung 90 vorgesehen.

Die Aufnahmetasche 104 und die Haltelappen 112 sind gemeinsam im ersten Zuschnittsteil 102 realisiert, indem das erste Zuschnittsteil 102 auf sich selbst zurückgeschlagen wird und die an die Faltlinie anschließenden Längsränder abschnittsweise verbunden werden, um die Aufnahmetasche 104 zu bilden. Die freien, über die Aufnahmetasche 104 hinausgehenden Abschnitte bilden dann die Haltelappen 112 (siehe z.B. Figuren 30 und 31).

Einer der Haltelappen 112, in Figur 31 der untere, flach ausgebreitete Haltelappen 112, ist durch eine U-förmige Schnittlinie 116 von einem umgebenden Rest des ersten Zuschnittsteils 102 abgetrennt. Durch die Schnittlinie 116 entsteht ein Bügel 118, der zwei seitlich des Haltelappens 112 liegende Riemenabschnitte 120 sowie einen die beiden Riemenabschnitte 120 verbindenden Steg 122 aufweist. Die Riemenabschnitte 120 gehen an ihrem dem Steg 122 gegenüberliegenden Ende einstückig in die Aufnahmetasche 104 über.

Der Bügel 118 ist Teil einer Gassackpaketfixierung 124. Diese weist außerdem wenigstens ein Paar erster und zweiter Fixierelemente 126, 128 auf, die ineinandersteckbar und somit aneinander fixierbar sind. Hier sind zwei Paare von Fixierelementen 126, 128 vorgesehen, die parallel zur Richtung B des Bodens 106 nebeneinander angeordnet sind. Die genaue Lage und Anzahl von Fixierelementen sowie deren Ausbildung liegen natürlich im Ermessen des Fachmanns.

In diesem Beispiel sind die ersten Fixierelemente 126 am zweiten Zuschnittsteil 103 ausgebildet, das sich parallel zur Richtung des Bodens B über die Aufnahmetasche 104 erstreckt. Die ersten Fixierelemente 126 haben in diesem Beispiel die Form von pfeilförmigen Haken (siehe insbesondere Figuren 30 und 35), die an einem zum Boden 106 weisenden Rand des zweiten Zuschnittsteils 103 ausgeformt sind.

Die beiden zweiten Fixierelemente 128 sind im Steg 122 ausgeformt und hier jeweils durch eine längliche Öffnung gebildet, durch die der Haken des ersten Fixierelements 126 so hindurchsteckbar ist, dass die Hakenränder den Rand der Öffnung hintergreifen und das erste Fixierelement 126 am Steg 122 fixieren. Figur 35 zeigt eine Detailansicht der Fixierelemente 126, 128.

Das zweite Zuschnittsteil 103 ist in diesem Ausführungsbeispiel aus mehrlagigem Gassackgewebe gefertigt, während das erste Zuschnittsteil 102 aus einem einlagigen Gassackgewebe zugeschnitten ist. Das Zuschneiden erfolgt hier jeweils durch Laserschneiden, wodurch im zweiten Zuschnittsteil 103 die Ränder der mehreren Lagen direkt miteinander verschweißt werden, ohne dass eine weitere Fixierung der Ränder aneinander notwendig wäre. Da somit auch die ersten Fixierelement 126 aus mehrlagigem Gassackgewebe bestehen, haben sie eine ausreichende Steifigkeit, um sich in den Öffnungen der zweiten Fixierelemente 128 zu verhaken.

Das zweite Zuschnittsteil 103 erstreckt sich seitlich, also parallel zur Bodenrichtung B, über die Aufnahmetasche 104 hinaus. An jedem seiner freien Enden ist ein Fixierabschnitt 130 gebildet, der der fahrzeugfesten Befestigung der Umhüllung 20 dient. Diese Befestigung muss nicht die volle Last des sich entfaltenden Gassacks 16 tragen, sondern dient hauptsächlich der Positionierung des Gassackmoduls 12 am Dachrahmen 23.

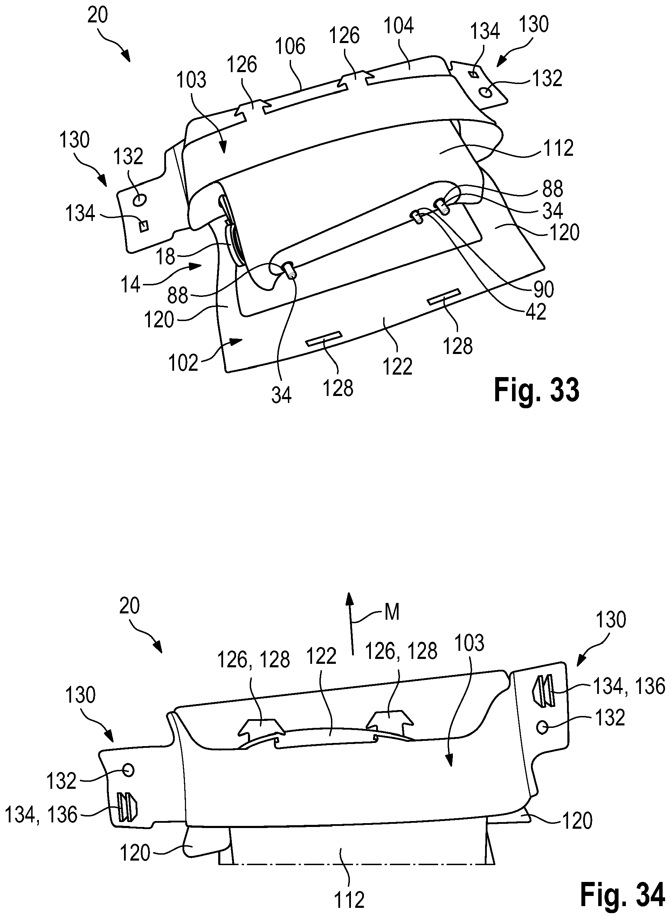

Die Fixierabschnitte 130 werden hier jedoch auch zur Vorfixierung des Gassackmoduls 10 im Fahrzeug genutzt. Hierzu weist jeder der Fixierabschnitte 130 neben einer Befestigungsöffnung 132, durch die beispielsweise eine Schraube zur fahrzeugfesten Befestigung eingesetzt wird, eine weitere Vorfixierungsöffnung 134 auf, in der ein Befestigungsclip 136 eingesetzt ist (siehe Figur 34). Beim Montieren des Gassackmoduls 10 am Fahrzeug wird der Befestigungsclip 136 in eine Öffnung am Dachrahmen 23 oder am Modulträger 22 geschoben und hält das Gassackmodul 10 in Position, bis die endgültige Befestigung erfolgt ist.

Die Befestigungsöffnung 132 und die Vorfixierungsöffnung 134 sind in den beiden Fixierabschnitten 130 jeweils parallel zur Modullängsrichtung M übereinander, aber mit unterschiedlicher Reihenfolge angeordnet (siehe z.B. Figur 30).

Zum Einsetzen des Gassackpakets 14 in die Umhüllung 20 wird zunächst das Hauptpaket 48 in die Aufnahmetasche 104 eingeschoben (siehe Figuren 31 und 32). Dann werden die beiden Haltelappen 112 nacheinander mit den Befestigungsöffnungen 88 und den Positionierungsöffnungen 90 über die Befestigungsbolzen 34 und den Positionierbolzen 42 des Gasgenerators 18 gezogen, sodass sie den Gasgenerator 18 sowie natürlich das Einblasende 46 des Gassacks 16 rückseitig des Gasgenerators 18 umgreifen (siehe Figuren 32 und 33 sowie 37 und 38).

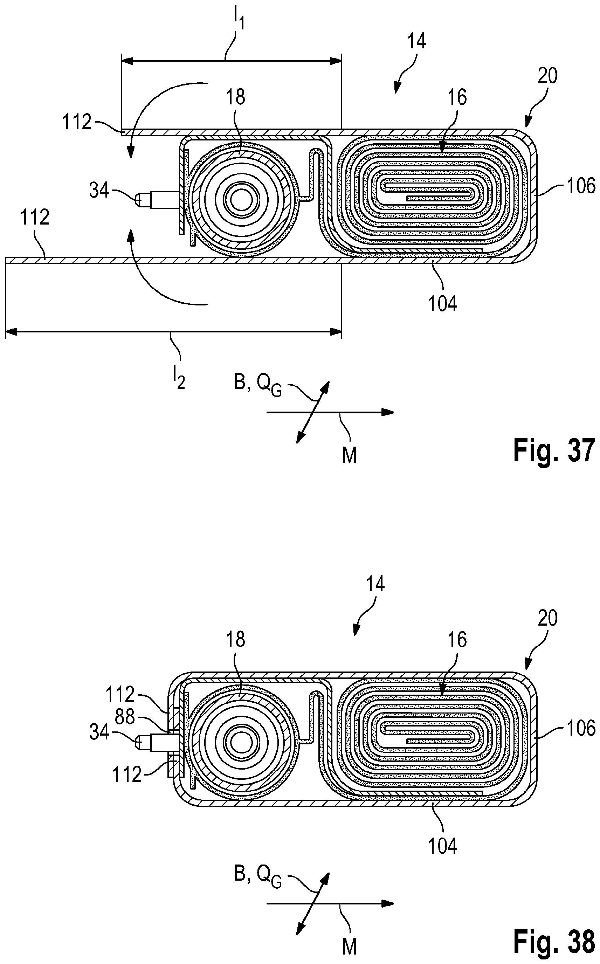

In Modullängsrichtung M können die beiden Haltelappen 112 unterschiedliche Längen I₁, I₂ aufweisen, wie dies beispielsweise in Figur 37 dargestellt ist. Auf diese Weise lassen sich die Zugkräfte, die über die Haltelappen 112 auf die Befestigungsbolzen 34 des Gasgenerators 18 wirken, in einem gewissen Maß einstellen. Dies führt dazu, dass die Ausrichtung des Gasgenerators 18 bezüglich einer Rotation um dessen Längsachse durch die Wahl der Länge der Haltelappen 112 festlegbar ist. Normalerweise ist es gewünscht, dass sich die Befestigungsbolzen 34 exakt in Modullängsrichtung M erstrecken. Es könnte jedoch, beispielsweise um die Montage am Dachrahmen zu erleichtern, auch von Vorteil sein, wenn die Bolzen 34 um wenige Grad gegenüber der Modullängsrichtung M verkippt sind. Da der Gasgenerator 18 meist einen flächigen Gasaustrittsbereich (nicht dargestellt) aufweist, ist eine Verkippung um wenige Grad ohne Einfluss auf die Gasausströmung und das Aufblasverhalten des Gassacks 16.

Nachdem die Gasgeneratorfixierung 114 wie beschrieben geschlossen ist (dargestellt in Figur 33), wird nun der Bügel 118 über die Haltelappen 112 gezogen. Im nächsten Schritt wird der Steg 122 unter dem zweiten Zuschnittsteil 103 hindurchgeschoben, und die Haken der ersten Fixierelemente 126 werden durch die Öffnungen der zweiten Fixierelementen 128 gesteckt (siehe Figur 34). Die Riemenabschnitte 120 liegen nun seitlich der Haltelappen 112 über dem Hauptpaket 48 des Gassackpakets 14 und halten dieses sicher in der Aufnahmetasche 104. Somit ist die Gassackpaketfixierung 124 geschlossen.

Das Gassackpaket 14 mit der Umhüllung 20 kann nun in den Modulträger 22 eingesetzt werden, um das Gassackmodul 10 am Fahrzeug zu montieren.

Bei der Aktivierung des Gassackmoduls 10 öffnet sich die Schwächungszone 108 am Boden 106 der Aufnahmetasche 104, um das Gassackpaket 14 austreten zu lassen. Die Gasgenerator-Fixierung 114, die GassackpaketFixierung 124 sowie die fahrzeugfeste Fixierung über die Fixierabschnitte 130 bleiben geschlossen.

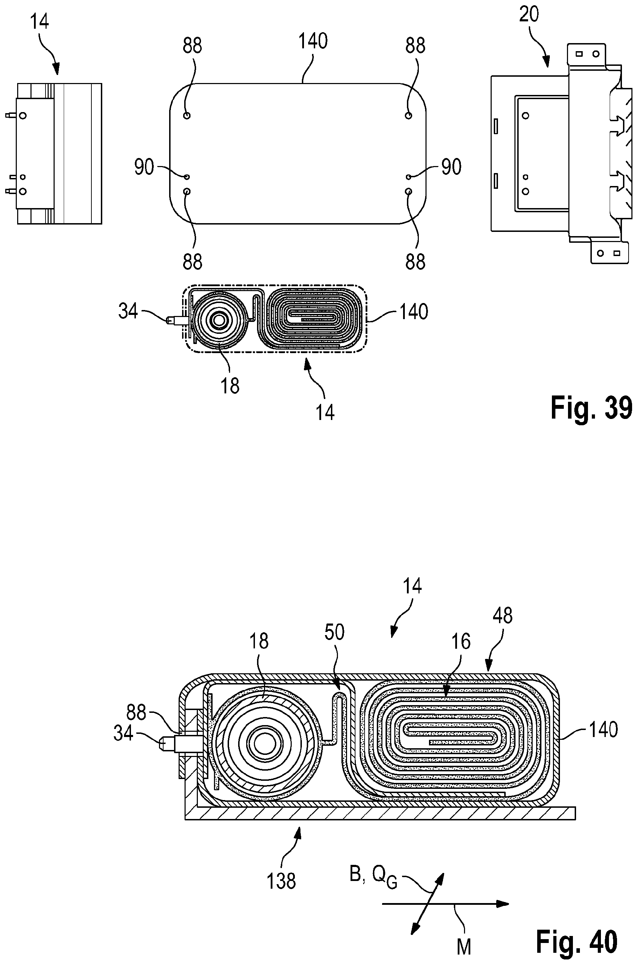

Um die Zickzackfaltung des Halses 54 im Verbindungsabschnitt 50 während des Einsetzens des Gassackpakets 14 in die Umhüllung 20 besser zu fixieren, kann in einem alternativen Verfahren eine Zwischenhülle 140 zum Einsatz kommen, wie die Figuren 39 bis 44 verdeutlichen.

Die Zwischenhülle 140 ist ein im Wesentlichen rechteckiges Stück Gassackgewebe, das an beiden freien Enden ein den Befestigungsbolzen 34 und dem Positionierungsbolzen 42 des Gasgenerators 18 entsprechendes Lochmuster mit zwei Befestigungsöffnungen 88 und einer Positionierungsöffnung 90 aufweist (siehe Figur 39).

Das fertig zusammengelegte Gassackpaket 14 inklusive des Gasgenerators 18 wird zunächst in die Zwischenhülle 140 eingeschlagen, wobei beide Enden der Zwischenhülle 140 über die Bolzen 34, 42 des Gasgenerators 18 gezogen werden. Dies ist in Figur 40 dargestellt, wobei ein bekanntes Faltgerät 136 zu Hilfe genommen wurde.

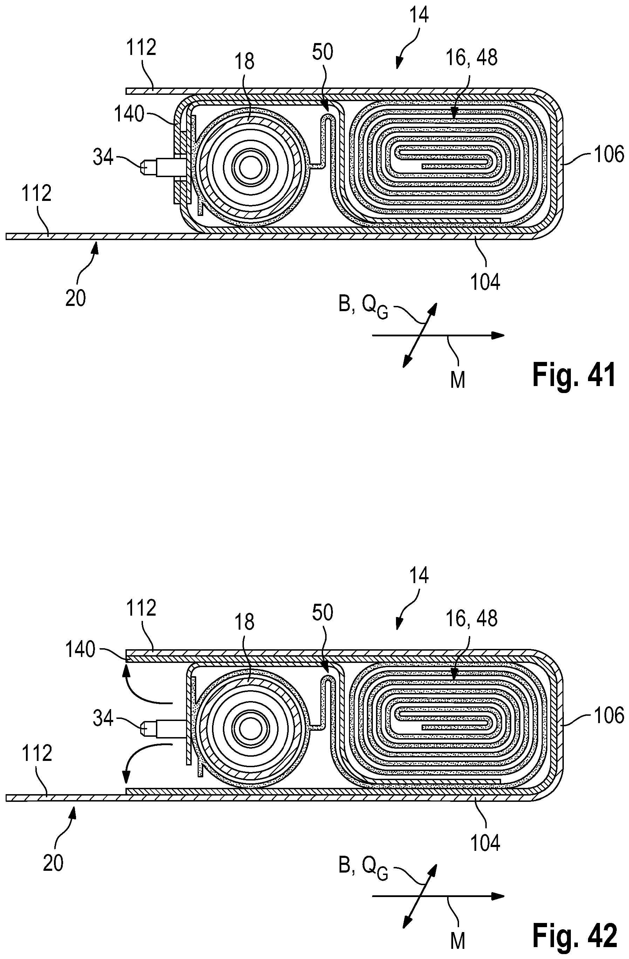

Das von der Zwischenhülle 140 fest umgebene Gassackpaket 14 wird nun in die Umhüllung 20 eingesetzt, wobei das Hauptpaket 48 in die Aufnahmetasche 104 eingeschoben wird (siehe Figur 41).

Jetzt wird die Zwischenhülle 140 wieder geöffnet, indem ihre beiden Enden von den Bolzen 34, 42 des Gasgenerators 18 abgezogen werden. Dies ist in Figur 42 dargestellt.

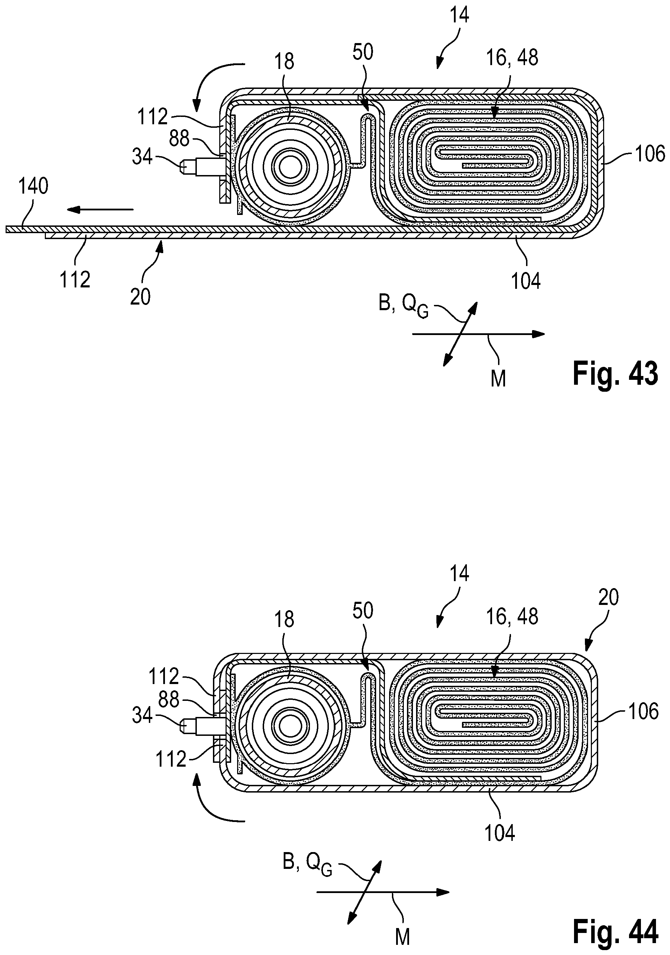

Einer der beiden Haltelappen 112 der Umhüllung 20 wird nun über die Bolzen 34, 42 des Gasgenerators 18 gezogen, um die Umhüllung 20 am Gasgenerator 18 zu fixieren. Jetzt kann die Zwischenhülle 140 zwischen dem Gassackpaket 14 und der Umhüllung 20 herausgezogen werden, wie in Figur 43 gezeigt ist. Hierbei kann sich die Faltung insbesondere des Verbindungsabschnitts 50 nicht mehr verändern, da der eine bereits mit dem Gasgenerator 18 verbundene Haltelappen 112 das Gassackpaket 14 in seiner gewünschten Form hält.

Nach Entfernen der Zwischenhülle 140 wird auch der zweite Haltelappen 112 geschlossen, indem seine Öffnungen über die Bolzen 34, 42 des Gasgenerators 18 gezogen werden.

Abschließend wird noch die Gassackpaketfixierung 124 geschlossen, indem, wie oben beschrieben, der Bügel 118 über den Gasgenerator 18 und die diesen umgebenden Haltelappen 112 gezogen, der Steg 122 unter das zweite Zuschnittsteil 103 geschoben wird und die Fixierelemente 126, 128 geschlossen werden.

## Patentansprüche

1. Fahrzeuginsassen-Rückhaltesystem mit einem Gassackmodul (12), wobei das Gassackmodul (12) am Dachhimmel unter einer Dachhimmelverkleidung (24) angeordnet ist, und wobei das Gassackmodul (12) einen Gasgenerator (18) und einen frontal wirkenden Gassack (16) umfasst, wobei der Gassack (16) ein gasgeneratorseitiges Einblasende (46) sowie ein erstes freies Ende (56) aufweist, das einen Rückhalteteil (52) des Gassacks (16) begrenzt, der einen Großteil des aufblasbaren Volumens des Gassacks (16) umfasst, wobei das erste freie Ende (56) im aufgeblasenen Zustand des Gassacks (16) in einem Fahrzeuginnenraum liegt und wobei in einem ersten Zeitraum während der Entfaltung des Gassacks (16) das erste freie Ende (56) noch über ein Fangband (74) mit dem Gassackmodul (12) im Bereich des Einblasendes (46) verbunden ist und sich bei Erreichen einer vorbestimmten Zugkraft das Fangband (74) löst und das erste freie Ende (56) freigibt, wobei das Fangband (74) während der Entfaltung des Gassacks (16) auf der zum Fahrzeuginsassen gerichteten Seite liegt.

2. Fahrzeuginsassen-Rückhaltesystem nach einem der vorhergehenden Ansprüche, **dadurch gekennzeichnet, dass** der Gassack (16) am Einblasende (46) einen Hals (54) aufweist, der in Fahrzeugquerrichtung (Q_{F}) gesehen schmaler ist als der anschließende Rückhalteteil (52) des Gassacks (16).

3. Fahrzeuginsassen-Rückhaltesystem nach Anspruch 2, **dadurch gekennzeichnet, dass** der Gassack (16) vor der Aktivierung zu einem Gassackpaket (14) zusammengelegt ist, das einen zusammengelegten Hauptabschnitt (48) und einen gefalteten Verbindungsabschnitt (50) umfasst, wobei der Hauptabschnitt (48) den zusammengelegten Rückhalteteil (52) und der Verbindungsabschnitt (50) den gefalteten Hals (54) enthält.

4. Fahrzeuginsassen-Rückhaltesystem nach Anspruch 3, **dadurch gekennzeichnet, dass** der Verbindungsabschnitt (50) und das Hauptpaket (48) so zusammengelegt und im Gassackpaket (14) positioniert sind, dass sich nach der Aktivierung des Gasgenerators (18) zunächst der Hals (54) befüllt, wodurch sich der Verbindungsabschnitt (50) streckt und entfaltet und das zusammengelegte Hautpaket (48) in Richtung zum Fahrzeuginnenraum geschoben wird, wobei insbesondere das Fangband (74) zumindest solange intakt bleibt, bis das Hauptpaket (48) beginnt, sich im Fahrzeuginnenraum zu entfalten.

5. Fahrzeuginsassen-Rückhaltesystem nach einem der vorhergehenden Ansprüche, **dadurch gekennzeichnet, dass** sich der Gassack (16) im vollständig aufgeblasenen Zustand im Fahrzeuginnenraum von einem Bereich der Sonnenblende (30) entlang einer Windschutzscheibe (26) zu und über eine Armaturentafel (60) in Richtung zu einem Fahrzeuginsassen erstreckt, wobei der Gassack (16) ein zweites freies, vorderes Ende (58) aufweist, das im vollständig aufgeblasenen Zustand an einem Übergang der Windschutzscheibe (26) zur Armaturentafel (60) liegt.

6. Fahrzeuginsassen-Rückhaltesystem nach Anspruch 5, **dadurch gekennzeichnet, dass** der Gassack (16) einen ersten Außenwandabschnitt (64) hat, der sich vom Einblasende (46) zum zweiten freien Ende (58) erstreckt und eine Abstützfläche gegenüber der Windschutzscheibe (26) bildet, einen zweiten Außenwandabschnitt (66), der sich vom zweiten freien Ende (58) zum ersten freien Ende (56) über die Armaturentafel (60) erstreckt, und einen dritten Außenwandabschnitt (68), der dem ersten und dem zweiten Außenwandabschnitt (64, 66) zumindest teilweise gegenüberliegt und der sich vom ersten freien Ende (56) zum Einblasende (46) erstreckt und der eine Prallfläche (62) für den Fahrzuginsassen bildet.

7. Fahrzeuginsassen-Rückhaltesystem nach Anspruch 6, **dadurch gekennzeichnet, dass** im nicht aufgeblasenen, entfalteten Zustand des Gassacks (16) der dritte Außenwandabschnitt (68) in einem Bereich des Übergangs vom ersten zum zweiten Außenwandabschnitt (64, 66) eine eingefaltete Tasche (82) hat, insbesondere wobei der Boden der eingefalteten Tasche (82) über ein weiteres Fangband (84) mit dem zweiten freien Ende (58) verbunden ist.

8. Fahrzeuginsassen-Rückhaltesystem nach einem der Ansprüche 5 bis 7, **dadurch gekennzeichnet, dass** in einem teilaufgeblasenen Zustand des Gassacks (16), in dem das Fangband (74) noch nicht gelöst ist, sich der Gassack (16) längs der Windschutzscheibe (26) bis zur Armaturentafel (60) erstreckt und vom zweiten freien Ende (58) aus umgeschlagen ist und sich in Richtung zum Gasgenerator (18) zurück erstreckt, sodass der Gassack (16) eine U-förmige Gestalt mit einem äußeren Schenkel (76) und einem inneren Schenkel (78) hat.

9. Fahrzeuginsassen-Rückhaltesystem nach Anspruch 8, **dadurch gekennzeichnet, dass** zu dem Zeitpunkt, zu dem sich das Fangband (74) löst, der äußere Schenkel (76) des Gassacks bereits teilweise mit Füllgas gefüllt ist und der innere Schenkel (78) noch im Wesentlichen ungefüllt ist.

10. Fahrzeuginsassen-Rückhaltesystem nach einem der vorhergehenden Ansprüche, **dadurch gekennzeichnet, dass** sich das Fangband (74) während der Entfaltung des Gassacks (16), solange es intakt ist, maximal etwa 5 bis 50 cm von einer Dachhimmelverkleidung (24) des Fahrzeugs aus ins Fahrzeuginnere erstreckt.

11. Fahrzeuginsassen-Rückhaltesystem nach einem der vorhergehenden Ansprüche, **dadurch gekennzeichnet, dass** das Fangband (74) gassackseitig nicht unmittelbar am ersten freien Ende (56) befestigt ist, sondern insbesondere etwa 5 bis 30 cm in Längsrichtung des Gassacks (16) vom ersten freien Ende (56) versetzt.

12. Fahrzeuginsassen-Rückhaltesystem nach einem der vorhergehenden Ansprüche, **dadurch gekennzeichnet, dass** das Fangband (74) ein gasgeneratorseitiges Ende hat, das am Gasgenerator (18) fixiert ist

13. Verfahren zum Zusammenlegen eines Gassacks (16) eines Fahrzeuginsassen-Rückhaltesystems nach einem der vorhergehenden Ansprüche, mit den Schritten:
- Ausbreiten des nicht aufgeblasenen Gassacks (16), sodass ein zweites freies Ende (58) vom Einblasende (46) maximal entfernt ist und ein erster Außenwandabschnitt (64) in Längsrichtung (L) des Gassacks (16) gestreckt ist, und das erste freie Ende (56) in der Nähe des Einblasendes (46) liegt und ein zweiter Außenwandabschnitt (66) in Längsrichtung (L) des Gassacks (16) gestreckt ist, wobei ein dritter Außenwandabschnitt (68) des Gassacks (16) wenigstens in einem Abschnitt auf sich selbst zurückgefaltet ist,
- Falten der beiden bezüglich der Längsrichtung (L) des Gassacks (16) seitlichen Bereiche des ausgebreiteten Gassacks (16) zur Mitte hin, insbesondere in einer Z-Faltung mit jeweils zwei Faltlinien (96, 98),
- Aufrollen des Gassacks (16) vom zweiten freien Ende (58) her, und
- Fixieren des Fangbands (74) im Bereich des Einblasendes (46).

14. Verfahren nach Anspruch 16, **dadurch gekennzeichnet, dass** ein Hals (54) des Gassacks (16), der in das Einblasende (46) des Gassacks (16) übergeht, vom Schritt des Aufrollens ausgenommen ist und in einer Zickzackfaltung, insbesondere mit einer bis drei Falten, gefaltet wird.

15. Verfahren nach einem der Ansprüche 16 und 17, **dadurch gekennzeichnet, dass** das erste freie Ende (56) vor dem Aufrollschritt einmal in Längsrichtung umgeschlagen wird.

## Claims

1. A vehicle occupant restraint system comprising an airbag module (12), wherein the airbag module (12) is arranged on the roof beneath a roof liner (24) and wherein the airbag module (12) includes an inflator (18) and a frontally acting airbag (16), wherein the airbag (16) includes an inflator-side inflation end (46) as well as a first free end (56) delimiting a restraint part (52) of the airbag (16) which comprises a major part of the inflatable volume of the airbag (16), wherein the first free end (56) in the inflated state of the airbag (16) is located in a vehicle interior and wherein in a first period during deployment of the airbag (16) the first free end (56) is still connected to the airbag module (12) via a tether (74) in the area of the inflation end (46) and upon reaching a predetermined tensile force the tether (74) becomes detached and releases the first free end (56), wherein during deployment of the airbag (16) the tether (74) is located on the side directed toward the vehicle occupant.

2. The vehicle occupant restraint system according to any one of the preceding claims, **characterized in that** at the inflation end (46) the airbag (16) includes a neck (54) which, when viewed in the transverse vehicle direction (Q_{F}), is narrower than the adjacent restraint part (52) of the airbag (16).

3. The vehicle occupant restraint system according to claim 2, **characterized in that** prior to activation the airbag (16) is folded into an airbag package (14) which comprises a folded main portion (48) and a folded connecting portion (50), with the main portion (48) containing the folded restraint part (52) and the connecting portion (50) containing the folded neck (54).

4. The vehicle restraint system according to claim 3, **characterized in that** the connecting portion (50) and the main package (48) are folded and positioned in the airbag package (14) so that after activation of the inflator (18) at first the neck (54) is filled, thus causing the connecting portion (50) to stretch and to deploy and causing the folded main package (48) to be moved toward the vehicle interior, wherein especially the tether (74) remains intact at least until the main package (48) starts deploying within the vehicle interior.

5. The vehicle occupant restraint system according to any one of the preceding claims, **characterized in that** in the completely inflated state the airbag (16) extends within the vehicle interior from an area of the sun visor (30) along a windshield (26) to and over an instrument panel (60) in the direction of a vehicle occupant, wherein the airbag (16) includes a second free front end (58) which in the completely inflated state is located at a transition of the windshield (26) to the instrument panel (60).

6. The vehicle occupant restraint system according to claim 5, **characterized in that** the airbag (16) comprises a first outer wall portion (64) extending from the inflation end (46) to the second free end (58) and forming a bearing surface against the windshield (26), a second outer wall portion (66) extending from the second free end (58) to the first free end (56) over the instrument panel (60) and a third outer wall portion (68) which is at least partially opposite to the first and second outer wall portions (64, 66) and which extends from the first free end (56) to the inflation end (46) and forms a baffle (62) for the vehicle occupant.

7. The vehicle occupant restraint system according to claim 6, **characterized in that** in a non-inflated deployed state of the airbag (16) the third outer wall portion (68) includes an inwardly folded bag (82) in an area of the transition from the first to the second outer wall portion (64, 66), especially wherein the bottom of the inwardly folded bag (82) is connected to the second free end (58) via another tether (84).

8. The vehicle restraint system according to any one of the claims 5 to 7, **characterized in that** in a partially inflated state of the airbag (16) in which the tether (74) has not yet become detached, the airbag (16) extends along the windshield (26) to the instrument panel (60) and is turned over from the second free end (58) and extends back toward the inflator (18) so that the airbag (16) takes a U-shaped configuration having an outer leg (76) and an inner leg (78).

9. The vehicle occupant restraint system according to claim 8, **characterized in that** at the time when the tether (74) becomes detached, the outer leg (76) of the airbag is already partially filled with filling gas and the inner leg (78) is still substantially unfilled.

10. The vehicle occupant restraint system according to any one of the preceding claims, **characterized in that** during deployment of the airbag (16) the tether (74) extends, as long as it is intact, maximally about 5 to 50 cm from a roof liner (24) of the vehicle into the vehicle interior.

11. The vehicle occupant restraint system according to any one of the preceding claims, **characterized in that** on the airbag side the tether (74) is not fastened directly to the first free end (56) but especially offset against the first free end (56) by about 5 to 30 cm in the longitudinal direction of the airbag (16).

12. The vehicle occupant restraint system according to any one of the preceding claims, **characterized in that** the tether (74) has an inflator-side end which is fixed on the inflator (18).

13. A method of folding an airbag (16) of a vehicle occupant restraint system according to any one of the preceding claims, comprising the steps of:
- spreading the non-inflated airbag (16) so that a second free end (58) is maximally distant from the inflation end (46) and a first outer wall portion (64) is stretched in the longitudinal direction (L) of the airbag (16) and the first free end (56) is located in the vicinity of the inflation end (46) and a second outer wall portion (66) is stretched in longitudinal direction (L) of the airbag (16), with a third outer wall portion (68) of the airbag (16) being folded back onto itself at least in a portion,
- folding the two areas of the spread airbag (16) lateral with respect to the longitudinal direction (L) of the airbag (16) toward the center, especially in Z folding each having two folding lines (96, 98),
- rolling up the airbag (16) from the second free end (58), and
- fixing the tether (74) in the area of the inflation end (46).

14. The method according to claim 16, **characterized in that** a neck (54) of the airbag (16) which merges into the inflation end (46) of the airbag (16) is excluded from the step of rolling-up and is folded in a zigzag folding, especially having one to three folds.

15. The method according to any one of the claims 16 and 17, **characterized in that** prior to the rolling step the first free end (56) is turned over once in the longitudinal direction.

## Revendications

1. Système de retenue des occupants d'un véhicule avec un module airbag (12), pour lequel le module airbag (12) est disposé sur la garniture de pavillon sous un habillage de pavillon (24) et pour lequel le module airbag (12) comprend un générateur de gaz (18) et un coussin gonflable (16) à action frontale, pour lequel le coussin gonflable (16) possède une extrémité de gonflage (46) côté générateur de gaz ainsi qu'une première extrémité libre (56), laquelle limite une zone de rétention (52) du coussin gonflable (16), laquelle comprend une majorité du volume gonflable du coussin gonflable (16), pour lequel la première extrémité libre (56) se trouve dans un intérieur de véhicule à l'état gonflé du coussin gonflable (16) et pour lequel dans une première période durant le déploiement du coussin gonflable (16), la première extrémité libre (56) est encore reliée au module airbag (12) dans la région de l'extrémité de gonflage (46) par l'intermédiaire d'une bande d'accrochage (74) et lorsqu'une force de traction prédéterminée est atteinte, la bande d'accrochage (74) est libérée et libère la première extrémité libre (56), pour lequel la sangle d'accrochage (74) se trouve sur le côté faisant face à l'occupant du véhicule pendant le déploiement du coussin gonflable (16).

2. Système de retenue des occupants d'un véhicule selon l'une des revendications précédentes, **caractérisé en ce que** le coussin gonflable (16) présente à l'extrémité de gonflage (46) un col (54) qui, vu dans la direction transversale (Q_{F}) du véhicule, est plus étroit que la partie de retenue adjacente (52) du coussin gonflable (16).

3. Système de retenue d'un occupant de véhicule selon la revendication 2, **caractérisé en ce que** le coussin gonflable (16) est replié avant son activation en un paquet constitué du coussin gonflable (14), qui comprend une section principale repliée (48) et une section de connexion repliée (50), pour lequel la section principale (48) contient la partie de retenue repliée (52) et la section de connexion (50) contient le col replié (54).

4. Système de retenue d'occupant de véhicule selon la revendication 3, **caractérisé en ce que** la section de connexion (50) et le paquet principal (48) sont repliés et positionnés dans le paquet constitué du coussin gonflable (14) de sorte que, lors de l'activation du générateur de gaz (18), le col (54) se remplit en premier, la section de connexion (50) s'étire et se déplie et le paquet principal (48) replié est poussé vers l'intérieur du véhicule, pour lequel la bande d'accrochage (74) reste notamment intacte au moins jusqu'à ce que le paquet principal (48) commence à se déplier dans l'intérieur du véhicule.

5. Système de retenue des occupants d'un véhicule selon l'une des revendications précédentes, **caractérisé en ce que**, à l'état complètement gonflé, le coussin gonflable (16) s'étend dans l'habitacle du véhicule depuis une région du pare-soleil (30) le long d'un pare-brise (26) vers et sur un tableau de bord (60) en direction d'un occupant du véhicule, pour lequel le coussin gonflable (16) possède une seconde extrémité avant libre (58) qui, à l'état complètement gonflé, est située à une transition du pare-brise (26) vers le tableau de bord (60).

6. Système de retenue d'occupant de véhicule selon la revendication 5, **caractérisé en ce que** le coussin gonflable (16) possède une première partie de paroi extérieure (64),laquelle s'étend de l'extrémité de gonflage (46) à la seconde extrémité libre (58) et fournit une surface de support contre le pare-brise (26), une seconde partie de paroi extérieure (66), qui s'étend de la deuxième extrémité libre (58) à la première extrémité libre (56) sur le tableau de bord (60), et une troisième partie de paroi extérieure (68) au moins partiellement opposée aux première et deuxième parties de paroi extérieure (64, 66) et qui s'étend de la première extrémité libre (56) à l'extrémité de gonflage (46) et qui forme une surface d'impact (62) pour l'occupant du véhicule.

7. Système de retenue des occupants d'un véhicule selon la revendication 6, **caractérisé en ce que**, dans l'état non déployé non gonflé du coussin gonflable (16), la troisième section de paroi extérieure (68) présente, dans une zone de transition entre la première et la deuxième section de paroi extérieure (64, 66), une poche repliée (82), pour lequel le fond de la poche repliée (82) est notamment relié à la deuxième extrémité libre (58) par une autre bande d'accrochage (84).

8. Système de retenue d'un occupant de véhicule selon l'une quelconque des revendications 5 à 7, **caractérisé en ce que** dans un état partiellement gonflé du coussin gonflable (16), dans lequel la sangle d'accrochage (74) n'est pas encore libérée, le coussin gonflable (16) s'étend le long du pare-brise (26) jusqu'au tableau de bord (60) et est replié à partir de la seconde extrémité libre (58) et s'étend en arrière vers le générateur de gaz (18) de sorte que le coussin gonflable (16) a une configuration en forme de U avec une branche extérieure (76) et une branche intérieure (78).

9. Système de retenue des occupants d'un véhicule selon la revendication 8, **caractérisé en ce que**, au moment où la sangle d'accrochage (74) est libérée, la branche extérieure (76) du coussin gonflable est déjà partiellement remplie de gaz de remplissage et la branche intérieure (78) est encore sensiblement non remplie.

10. Système de retenue des occupants d'un véhicule selon l'une des revendications précédentes, **caractérisé en ce que** la sangle d'accrochage (74) s'étend dans l'habitacle du véhicule à partir d'un habillage de pavillon (24) du véhicule sur une longueur maximale d'environ 5 à 50 cm pendant le déploiement du coussin gonflable (16), tant qu'elle est intacte.

11. Système de retenue des occupants d'un véhicule selon l'une des revendications précédentes, **caractérisé en ce que** la bande d'accrochage (74) n'est pas fixée directement à la première extrémité libre (56) du côté du coussin gonflable, mais est décalée, en particulier d'environ 5 à 30 cm dans la direction longitudinale du coussin gonflable (16) par rapport à la première extrémité libre (56).

12. Système de retenue des occupants d'un véhicule selon l'une des revendications précédentes, **caractérisé en ce que** la sangle d'accrochage (74) présente une extrémité du côté du générateur de gaz qui est fixée au générateur de gaz (18).

13. Procédé de pliage d'un coussin gonflable (16) d'un système de retenue d'un occupant de véhicule selon l'une quelconque des revendications précédentes, comprenant les étapes suivantes :
- Etendre le coussin gonflable non gonflé (16) de sorte qu'une seconde extrémité libre (58) soit éloignée au maximum de l'extrémité de gonflage (46) et qu'une première partie de paroi extérieure (64) s'étende dans la direction longitudinale (L) du coussin gonflable (16), et que la première extrémité libre (56) soit proche de l'extrémité de gonflage (46) et qu'une deuxième partie de paroi extérieure (66) s'étende dans la direction longitudinale (L) du coussin gonflable (16), pour lequel une troisième partie de paroi extérieure (68) du coussin gonflable (16) est repliée sur elle-même au moins dans une partie,
- plier les deux zones latérales du coussin gonflable (16) par rapport à la direction longitudinale (L) du coussin gonflable (16) vers le centre, en particulier selon un pliage en Z avec deux lignes de pliage (96, 98) à chaque fois,
- enrouler le sac gonflable (16) à partir de la seconde extrémité libre (58), et
- fixer la bande d'accrochage (74) dans la zone de l'extrémité de gonflage (46).

14. Procédé selon la revendication 16, **caractérisé en ce qu'**un col (54) du coussin gonflable (16), qui se raccorde à l'extrémité de gonflage (46) du coussin gonflable (16), est exclu de l'étape d'enroulement et est plié en zigzag, en particulier avec un à trois plis.

15. Procédé selon l'une quelconque des revendications 16 et 17, **caractérisé en ce que** la première extrémité libre (56) est repliée une fois longitudinalement avant l'étape d'enroulement.
